# EUROPÄISCHE PATENTSCHRIFT

(11) **EP 2 550 599 B1**
(45) Veröffentlichungstag und Bekanntmachung des Hinweises auf die Patenterteilung: **06.05.2020**
(21) Anmeldenummer: 11711800.0
(22) Anmeldetag: 18.03.2011
(51) Int. Cl.: G06F 11/16, G06F 11/20

(54) **KONTROLLRECHNERSYSTEM, VERFAHREN ZUR STEUERUNG EINES KONTROLLRECHNERSYSTEMS, SOWIE VERWENDUNG EINES KONTROLLRECHNERSYSTEMS**
CONTROL COMPUTER SYSTEM, METHOD FOR CONTROLLING A CONTROL COMPUTER SYSTEM, AND USE OF A CONTROL COMPUTER SYSTEM
SYSTÈME D'ORDINATEUR DE COMMANDE, PROCÉDÉ DE COMMANDE D'UN SYSTÈME D'ORDINATEUR DE COMMANDE, ET UTILISATION D'UN SYSTÈME D'ORDINATEUR DE COMMANDE

(30) Priorität: 01.10.2010 DE 102010041890; 23.03.2010 DE 102010003161
(43) Veröffentlichungstag der Anmeldung: 30.01.2013
(73) Patentinhaber: Continental Teves AG & Co. OHG, 60488 Frankfurt am Main (DE)
(72) Erfinder: KABULEPA, Lukusa Didier, 64390 Erzhausen (DE); EHRENBERG, Thorsten, 61231 Bad Nauheim (DE); BAUMEISTER, Daniel, 63741 Aschaffenburg (DE)
(86) Internationale Anmeldenummer: PCT/EP2011/054144
(87) Internationale Veröffentlichungsnummer: WO 2011/117156

(56) Entgegenhaltungen:
- EP-A1- 0 687 976
- WO-A1-99/66406
- WO-A1-2006/045734
- WO-A2-99/30235
- US-A- 3 864 670
- US-A- 5 901 281
- US-A- 5 915 082
- CUYVERS R ET AL: "FAULT-TOLERANCE IN PROCESS CONTROL: POSSIBILITIES, LIMITATIONS AND TRENDS", JOURNAL A, SOFT VISION, BRUSSELS, BE, Bd. 31, Nr. 4, 1. Dezember 1990 (1990-12-01), Seiten 33-40, XP000178688, ISSN: 0771-1107

## Beschreibung

Die folgende Erfindung betrifft eine redundante Prozessor-Steuerung und ein Steuerungsverfahren, insbesondere eine redundante Zwei-Prozessor-Steuerung sowie ein mehrkerniges redundantes Kontrollrechnersystem.

Es ist bekannt, zwei Prozessoren in einem Lockstep-Modus oder Gleichschrittbetrieb dieselben Anweisungen abarbeiten zu lassen, und durch Vergleich der Ausgabedaten festzustellen, ob ein Fehler aufgetreten ist. Hierbei können die zwei Prozessoren taktsynchron oder mit einem gewissen zeitlichen Versatz (der beim Vergleich entsprechend kompensiert wird) betrieben werden. Dabei können sowohl permanente Fehler, die z.B. durch einen bei der Fertigung eingebrachten Defekt verursacht werden, als auch transiente Fehler auftreten, die z.B. durch eine vorübergehende elektromagnetische Einstreuung hervorgerufen werden. Bei Auftreten eines Gleichschrittfehlers, bei dem sich also die Ausgabedaten der zwei Prozessoren voneinander unterscheiden, wird die Programmausführung unterbrochen und im einfachsten Fall das Rechnersystem deaktiviert.

Die Bereitstellung von Fehlertoleranz, wonach das Rechnersystem also bei Auftreten eines Fehlers weiterhin das gewünschte Programm abarbeitet, bildet jedoch eine besondere Herausforderung für zweifach redundante Prozessoren. Es sind Versuche unternommen worden, die darauf abzielten, Fehlertoleranzfähigkeit in Sicherheitsplattformen mit nur zwei redundanten Prozessoren zu unterstützen. Die US 5915082 B2 offenbart eine Systemarchitektur, bei der interne Busse mit Paritätsbits versehen und diese verglichen werden. Nach Erkennung eines Paritätsfehlers auf einer Seite wird der dazu gehörende Prozessor getrennt, so dass er keinen Einfluss mehr im System hat. Nach jedem Gleichschrittfehler (lockstep error), der ohne Paritätsfehler auftritt, wird das System abgeschaltet. Diese auf Paritätsprüfung basierte Vorgehensweise bietet keine ausreichende Abdeckung von Fällen, in denen die Verfügbarkeit eines redundanten Systems auch nach Auftreten eines Gleichschrittfehlers sehr erwünscht ist. Die Paritätsprüfung kann beispielsweise zu einer falschen Entscheidung führen, wenn die zwei internen redundanten Einheiten gleichzeitig unterschiedliche Mehr-Bit-Fehler zeigen.

Weitere bekannt fehlertolerante Systemarchitekturen umfassen mindestens drei Prozessorkerne, wie beispielsweise in der US 5 901 281 A beschrieben, mit geteiltem oder gemeinsam benutztem Speicher. Hierbei wird der Gleichschrittbetrieb (lockstep) der Prozessoren stets durch Überwachen von Bussignalen überprüft. Im Folgenden wird der Gleichschrittbetrieb auch als synchrones Abarbeiten eines Programms oder Programmteile durch die Prozessoren bezeichnet.

Fällt der aktive Prozessor aus, so geht die Eigentümerschaft über den Speicherbereich und Komponenten, die vom aktiven Prozessor über Eingabe/Ausgabekanäle angesteuert werden, an einen anderen Prozessor über. Im Gleichschrittfehlerzustand (lockstep error, Synchronisationsfehler), der auf einen Verriegelungsschrittfehler folgt, werden Datenzugriffe und Steuerungsprozesse dem aktiven Prozessor entnommen und durch einen anderen Prozessor aufrechterhalten.

Bestehend aus einer Dreifach-Redundanz (TMR: Triple modular redundancy) von Prozessoren und gemeinsam benutztem Speicher stellt die klassische minimale Konfiguration für ein fehlertolerantes System eine noch teuere Lösung für manche Sicherheitsarchitekturen dar, deren Sicherheitskonzept auf der Verwendung von zwei redundanten, im Gleichschritt (lockstep) bzw. synchron laufenden Prozessoren basiert. Die Fehlertoleranz bildet jedoch eine besondere Herausforderung für zweifach redundante Prozessoren.

US 7366948 B2 und US 2006/ 0107106 beschreiben ein Verfahren zur Unterstützung der Verfügbarkeit in einem aus mehreren in Lockstep-Modus laufenden Prozessorpaaren bestehenden System. In jedem Paar sind zwei redundante Prozessoren zusammengesetzt, deren Ausgänge stets verglichen werden. Falls ein Fehler in einem Prozessorpaar auftritt, wird ein anderes Prozessorpaar als Boot-Prozessorpaar die Ansteuerung des Systems übernehmen. In der Zwischenzeit wird das mit Fehler behaftete Prozessorpaar versuchen, die Synchronisation zurückzugewinnen und sich als Ersatzprozessorpaar zur Verfügung zu stellen. Somit wird eine hohe Verfügbarkeit des Systems gewährleistet. Dieses Verfahren ist jedoch zu teuer für viele eingebettete Systeme, da ein Prozessorpaar im fehlerfreien Fall nicht verwendet wird und das beschriebene Verfahren somit ein schlechtes Kosten/Performanz Verhältnis anbietet. Vier in zwei Paare aufgeteilte Prozessoren, deren Ausgangssignale paarweise verglichen werden, müssen immer für eine einzige Aufgabe belegt werden. Wenn ein Gleichschrittfehler (LOL: loss of lockstep) oder ein anderer Prozessor-interner Fehler in einem Prozessorpaar erkannt wird, versetzt das Betriebssystem das fehlerhafte Prozessorpaar in den Ruhezustand und aktiviert ein anderes Prozessorpaar.

In der EP 1 380 953 B1 ist ein fehlertolerantes Computersystem mit Synchronismus im Gleichschritt definiert, das eine Vielzahl von Rechenmodulen mit einem Prozessor und einem Speicher enthält, und ein Verfahren zur Resynchronisierung desselben beschrieben. Da jedes Rechenmodul dieselbe Anweisungskette synchron zueinander verarbeitet, ist dieses Rechnersystem wenig effizient.

Die EP 1 456 720 B1 offenbart einen Rechnerverbund für sicherheitskritische Anwendungen in Kraftfahrzeugen aus zwei oder mehreren Kontrollrechnersystemen, die jeweils zwei taktsynchron arbeitende Kontrollrechner mit teil- oder vollredundante Peripherieelemente und teil- oder vollredundanten Speicherelementen umfassen, welche auf einem Chip integriert sind. Die taktsynchron arbeitenden Kontrollrechner eines Kontrollrechnersystems sind mit einer Arbitrationseinheit verbunden, welche sie auf Fehler überwacht und einen dem Kontrollrechnersystem zugeordneten Kommunikationskontroller an einen Fahrzeugdatenbus an- oder abkoppeln kann. Bei einer Fehlfunktion eines der Kontrollrechner wird das entsprechende Kontrollrechnersystem teilweise oder vollständig deaktiviert.

Aus der DE 10 2009 000 045 A1 ist eine Vorrichtung zum Betreiben eines Steuergerätes bekannt, welches ein Rechnersystem aus zwei Paaren mit jeweils zwei Ausführungseinheiten aufweist und insbesondere in einem Kraftfahrzeug verwendet wird. Die Ausführungseinheiten jedes Paares arbeiten ein gleiches Programm ab, und die Ausgangssignale jeder Ausführungseinheit werden durch je eine Vergleichseinheit miteinander verglichen und bei Auftreten einer Abweichung wird ein Fehlersignal ausgegeben. Tritt das Fehlersignal für ein erstes Paar von Ausführungseinheiten auf, so wird dieses abgeschaltet und das Rechnersystem mit dem zweiten Paar von Ausführungseinheiten weiterbetrieben, wobei ein Vorwarnsignal an den Fahrer ausgegeben wird.

Die US 3,864,670 A beschreibt ein System mit zwei synchronisiert arbeitenden Prozessoren, deren Ausgangssignale verglichen werden, wobei im Falle eines Gleichschrittfehlers der fehlerhaft arbeitende Prozessor vom System isoliert wird. Durch den funktionsfähigen Prozessor erfolgt zur Lokalisierung des Fehlers anschließend eine Analyse des Speichers des fehlerhaften Prozessors. Nach Reparatur des fehlerhaften Prozessors erfolgt eine Synchronisierung der beiden Prozessoren im laufenden Betrieb.

Um die Auswirkungen eines Fehlers zu begrenzen oder um sich von einem Fehler völlig zu erholen, nachdem anhängige I/O-Operationen von einem Prozessor oder Prozessorsatz initiiert wurden, ist aus der WO 99/66406 A1 eine Brücke für ein Mehrprozessorsystem bekannt, welche einen Pufferspeicher für angekündigte bzw. anstehende Schreibvorgänge umfasst, in welchem im Fehlerfall entsprechende Schreibzugriffe gespeichert werden.

Für den gleichen Zweck beschreibt die EP 0 687 976 A1 eine Rechenwerkeinheit mit zwei redundanten Rechnern, die unabhängig identische Rechenaufgaben ausführen können und von denen jeder Rechendaten zum Vergleichen an einen Komparator liefert. Stellt der Komparator eine Differenz der Rechendaten der beiden Rechner fest, steuert dieser einen Multiplexer in der Weise an, dass die Rechendaten von dem Rechner an einen Ausgang geliefert werden, dessen richtiges Funktionieren durch ebenfalls von der Recheneinheit umfasste Kontrolleinrichtungen bestätigt ist.

In der WO 99/30235 A2 wird ein Verfahren zum Reduzieren der Anzahl von Datenzyklen beim Durchführen einer Bit-Fehlerprüfung in Datenwörtern beschrieben, wobei die Datenwörter zu eingelesenen Anweisungen eines Prozessors mit zwei parallel arbeitende Recheneinheiten gehören. Die Datenwörter werden dabei ohne Korrektur möglicher Bit-Fehler in die beiden Recheneinheiten gelesen. Die Ausgangsdaten der parallel arbeitenden Recheneinheiten werden mittels eines Komparators verglichen, wobei im Falle einer Differenz eine Diagnoseeinheit die Recheneinheit bestimmt, welche korrekte Ausgangsdaten geliefert hat. Der Bestimmungsprozess erfolgt dabei unter Berücksichtigung von Prüfinformationen weiterer Recheneinheiten, die eine kontinuierliche Prüfung der Datenwörter auf Bitfehler vornehmen. Die Recheneinheit, die inkorrekte Ausgangsdaten liefert, wird daraufhin angehalten, einer Anlaufroutine unterzogen und in Phase mit der noch arbeitenden Recheneinheit gebracht.

Einen Überblick über unterschiedliche Ausführungsformen fehlertoleranter Systeme kann dem Artikel: Cuyvers R. et al: "Fault-tolerance in process control: possibilities, limitations and trends", Journal A, Soft Vision, Brussels, BE, Bd. 31, Nr. 4, 1. Dezember 1990 (1990-12-01), Seiten 33-40, XP000178688, ISSN: 0771-1107 entnommen werden.

Die genannten Schriften weisen den Nachteil auf, dass eine hohe Redundanz vorgehalten werden muss, da im fehlerfreien Fall mindestens ein Prozessorpaar untätig ist bzw. dasselbe Programm wie das aktive Prozessorpaar ausführt, welches Peripherieeinheiten ansteuert. Jeder einzelne Prozessor muss daher die gesamte benötigte Rechenleistung bereitstellen, womit die bekannten Rechnersysteme wenig effizient arbeiten. Dies ist aus Kostengesichtspunkten insbesondere bei in hohen Stückzahlen gefertigten Systemen nicht wünschenswert.

Das in US 7366948 B2 beschriebene Verfahren stellt eine sehr teure Lösung für eingebettete Systeme dar. Hinzu kommt die Tatsache, dass andere Komponenten außer den Prozessorkernen nicht immer redundant implementiert werden können. Typischerweise spielen Kostengründe eine wichtige Rolle beim Entwurf von Sicherheitsarchitekturen für verschiedene sicherheitsrelevante Systeme wie beispielsweise Bremsanwendungen im Automotive-Bereich. Programmspeicher wie beispielsweise Flash-Speicher sind nicht redundant, sondern werden von allen vorhandenen Prozessoren verwendet. Herkömmliche Verfahren betrachten nicht diese Rahmenbedingung von nicht-redundanten Komponenten im Ansatz zur Gewährleistung der Verfügbarkeit in auf redundanten Prozessoren basierenden Sicherheitsarchitekturen. Ein weiteres Problem bezüglich der Gewährleistung der Verfügbarkeit von Prozessoren in Sicherheitsarchitekturen ist es, dass eine neue Inbetriebnahme eines vorher ausgefallenen Prozessors nur nach einer erfolgreich abgeschlossenen sicherheitsgerechten Überprüfung stattfinden darf.

Vor diesem Hintergrund besteht Bedarf an einer Sicherheitsarchitektur mit nur zwei redundanten Prozessoren, die eine hohe Verfügbarkeit des Systems ermöglicht. Weiterhin besteht Bedarf an einer Sicherheitsarchitektur mit drei oder mehr Prozessoren, beispielsweise zwei Prozessoren mit jeweils zwei Kernen, die eine hohe Verfügbarkeit des Systems ermöglicht.

Gemäß einem Aspekt ist es Aufgabe der vorliegenden Erfindung, ein Kontrollrechnersystem bereitzustellen, welches gleichzeitig fehlertolerant und effizient ist.

Gemäß einer Ausführungsform soll eine auf Paaren von redundanten Prozessorkernen basierende Sicherheitsarchitektur so gestaltet werden, dass die vorhandene Sicherheitsstufe beibehalten bleibt und eine hohe Verfügbarkeit des Systems ermöglicht wird. Daneben sollen die Prozessoren im normalen (bzw. fehlerfreien) Betrieb eine hohe Leistung erbringen. Nach einer Fehlererkennung soll die Verfügbarkeit des Systems unter Berücksichtigung einer sicheren Anbindung von nicht-redundanten Komponenten aufrechterhalten bleiben.

Vor diesem Hintergrund wird ein Kontrollrechnersystem nach Anspruch 1 bereitgestellt. Darüber hinaus wird ein Verfahren zur Steuerung eines Kontrollrechnersystems nach Anspruch 17 bereitgestellt. Weiterhin wird eine Verwendung eines Kontrollrechnersystems nach Anspruch 27 bereitgestellt.

Erfindungsgemäß wird ein Kontrollrechnersystem bereitgestellt, umfassend mindestens zwei Prozessorpaare mit genau zwei redundant ausgelegten Prozessoren und/oder Prozessorkernen, mindestens zwei Vergleichseinheiten (Komparatoren) zur Erkennung von Fehlern, mindestens einen Speicher, mindestens eine Peripherieeinheit, mindestens ein Schaltelement, in Form einer Schaltmatrix, welches Zugriffe der Prozessoren auf Speicher und Peripherieeinheiten ermöglicht oder sperrt, wobei eine vorzugsweise gemeinsame Fehlerbehandlungseinheit (Wiederherstellungskontrolleinheit; SVM-Modul) Signale der mindestens zwei Vergleichseinheiten empfängt und die mindestens eine Schaltmatrix steuert, um einen Zugriff eines Prozessors oder eines Prozessorpaars auf Speicher und/oder Peripherieeinheiten komplett oder selektiv zu verhindern. Weiterhin ist das Kontrollrechnersystem derart ausgebildet, dass die Prozessorpaare im fehlerfreien Betrieb verschiedene Programme zur Bereitstellung von Funktionen ausführen können und bei Auftreten eines Fehlers das fehlerfreie Prozessorpaar zumindest einige Funktionen des fehlerbehafteten Prozessorpaars übernimmt. Das Kontrollrechnersystem ist ausgebildet, um folgende Schritte durchzuführen:
- Übertragen von Daten zwischen der ersten Schaltmatrix und dem ersten Speicher zwischen der zweiten Schaltmatrix und dem zweiten Speicher, zwischen der ersten Schaltmatrix und der ersten Peripheriebrücke und zwischen der zweiten Schaltmatrix und der zweiten Peripheriebrücke,
- Vergleich der übertragenen Daten zwischen der ersten Schaltmatrix und dem ersten Speicher mit den übertragenen Daten zwischen der zweiten Schaltmatrix und dem zweiten Speicher,
- Vergleich der übertragenen Daten zwischen der ersten Schaltmatrix und der ersten Peripheriebrücke und den übertragenen Daten zwischen zweiter Schaltmatrix und zweiter Peripheriebrücke.

Gemäß einer Ausführungsform wird bei Auftreten eines Fehlers ein Zugriff des mindestens einen fehlerbehafteten Prozessorpaars auf Peripherieeinheiten, insbesondere Aktuatoren, verhindert.

Gemäß einer Ausführungsform erfolgt jeder Zugriff auf Peripherieeinheiten über eine Peripheriebrücke, die von der Fehlerbehandlungseinheit (Wiederherstellungskontrolleinheit; SVM-Modul) gesteuert wird.

Gemäß einer Ausführungsform sind die mindestens zwei Vergleichseinheiten direkt mit den beiden Prozessoren eines Prozessorpaars verbunden.

Erfindungsgemäß umfasst die Vergleichseinheit mindestens zwei getrennte Schaltmatrizen, wobei die erste Schaltmatrix mit einer ersten Peripheriebrücke und mindestens einem ersten Speicher verbunden ist, während die zweite Schaltmatrix mit einer zweiten Peripheriebrücke und mindestens einem zweiten Speicher verbunden ist.

Gemäß einer Ausführungsform ist der erste Prozessor eines Prozessorpaars mit einer ersten Schaltmatrix verbunden und der zweite Prozessor eines Prozessorpaars mit einer zweiten Schaltmatrix verbunden.

Gemäß einer Ausführungsform werden die zwischen erster Schaltmatrix und erstem Speicher übertragenen Daten von einer Vergleichseinheit mit den zwischen zweiter Schaltmatrix und zweitem Speicher übertragenen Daten verglichen, wobei die zwischen erster Schaltmatrix und erster Peripheriebrücke übertragenen Daten von einer Vergleichseinheit mit den zwischen zweiter Schaltmatrix und zweiter Peripheriebrücke übertragenen Daten verglichen werden.

Gemäß einer Ausführungsform ist zwischen den Prozessoren und Schaltmatrizen jeweils ein Multiplexer positioniert, wobei diese so verschaltet sind, dass der erste Prozessor eines Prozessorpaars auf die zweite Schaltmatrix zugreifen kann und der zweite Prozessor eines Prozessorpaars auf die erste Schaltmatrix zugreifen kann, sobald die Fehlerbehandlungseinheit (Wiederherstellungseinheit, SVM-Modul) die Multiplexer entsprechend steuert.

Gemäß einer Ausführungsform umfasst mindestens eine Schaltmatrix eine Überwachungseinheit, welche Zugriffe auf Speicher oder Peripherieeinheiten sperren oder in einem externen oder internen vorzugsweise nichtflüchtigen Speicher protokollieren kann.

Gemäß einer Ausführungsform empfängt die Fehlerbehandlungseinheit Signale der mindestens zwei Vergleichseinheiten direkt ohne zwischengeschaltete Schaltmatrix.

Gemäß einer Ausführungsform umfasst das Kontrollrechnersystem einen ersten und einen zweiten flüchtigen Speicher sowie einen nichtflüchtigen Speicher, wobei insbesondere ein Prozessorpaar auf den ersten flüchtigen Speicher zugreift und das zweite Prozessorpaar auf den zweiten flüchtigen Speicher zugreift und beide Prozessorpaare auf den einen nichtflüchtigen Speicher zugreifen.

Gemäß einer Ausführungsform ist der erste Prozessor eines Prozessorpaars direkt mit mindestens einer Schaltmatrix verbunden ist, kann also lesend und schreibend auf Speicher und/oder Peripherieeinheiten zugreifen, während der zweite Prozessor eines Prozessorpaars nur lesend auf Daten zugreift, wobei insbesondere eine direkt mit beiden Prozessoren eines Prozessorpaars verbundene Vergleichseinheit Daten an den zweiten Prozessor des verbundenen Prozessorpaars übermittelt. Weiterhin umfasst das Kontrollrechnersystem (die Steuerungseinrichtung) eine Wiederherstellungskontrolleinheit (die auch als SVM-Module in einigen Ausführungsformen bezeichnet wird), die eingerichtet ist, die Ausführung wenigstens eines Testprogramms durch die beiden Prozessoren nach Auftreten eines Synchronisationsfehlers zu überwachen und die Testergebnisse zu bewerten, und weiterhin eingerichtet, wenigstens den ersten Multiplexer zu konfigurieren.

Gemäß einer oder mehrerer Ausführungsformen ist die Wiederherstellungskontrolleinheit so eingerichtet, den Synchronisationsfehler einem Fehlertyp zuzuordnen und auf Basis des Fehlertyps ein Testprogramm auszuwählen. Der aufgetretene Fehler wird analysiert, um herauszufinden, wo der Fehler aufgetreten sein kann bzw. durch welche der Komponente er verursacht wurde. Auf dieser Grundlage wird dann ein geeignetes Testprogramm ausgewählt, wobei die Testprogramme sowie die erwarteten Testergebnisse vorab abgespeichert sind, beispielsweise in der Wiederherstellungskontrolleinheit. Wenn sich der Fehler, d.h. der Unterschied der beiden Prozessorausgaben, in einer unterschiedlichen Speicheradresse zeigt, kann beispielsweise ein Testprogramm gewählt werden, mit dem Speicherfehler erkennbar sind. Diese Herangehensweise verbessert die Fehlereingrenzung.

Gemäß einer oder mehrerer Ausführungsformen ist die Wiederherstellungskontrolleinheit (SVM-Modul) eingerichtet ist, den ersten Multiplexer auf Basis des Testergebnisses zu konfigurieren. Der Multiplexer, und allgemein die Steuerungseinrichtung, wird so in Abhängigkeit vom Testergebnis konfiguriert. Es ist möglich, dass die Funktion des Multiplexers von einer Bus-Matrix übernommen wird.

Gemäß einer oder mehrerer Ausführungsformen ist die erste periphere Einheit eine gemeinsame Einheit, die wahlweise von einem der beiden Prozessoren angesteuert werden kann. Weiterhin weist die Steuerungsvorrichtung gemäß eine Ausführungsform wenigstens zwei weitere periphere Einheiten auf, wobei die eine der beiden peripheren Einheiten nur dem ersten Prozessor und die andere der beiden peripheren Einheiten nur dem zweiten Prozessor als private periphere Einheit zugeordnet ist, auf die nur der jeweils zugeordnete Prozessor zugreifen kann. Unter einer gemeinsamen peripheren Einheit bzw. Komponente wird hier eine Einheit verstanden, welche redundant angesteuert wird, d.h. die Ansteuerung erfolgt wahlweise durch einen der beiden Prozessoren, wobei der andere zum Vergleichen dient. Eine private Einheit wird dagegen nur von jeweils einem der beiden Prozessoren angesteuert. Der jeweils andere Prozessor hat keinen Zugriff auf diese Einheit, auch nicht über den oder die Multiplexer. Die hier vorgestellte Lösung gestattet es, die Wiedergewinnung der Synchronisation zwischen zwei redundanten Prozessoren auch unter Berücksichtigung von nicht-redundanten Komponenten zu ermöglichen, die typischerweise in verschiedenen eingebetteten Systemen aus Kostengründen implementiert werden.

Gemäß einer oder mehrerer Ausführungsformen sind die zwei weiteren peripheren Einheiten redundante Einheiten, d.h. sie sind physikalisch identisch und dienen zur Ausführung dergleichen Funktion.

Erfindungsgemäß wird ein Verfahren zur Steuerung eines Kontrollrechnersystems, welches mindestens zwei Prozessorpaare mit jeweils genau zwei redundant ausgelegten Prozessoren und/oder Prozessorkernen, mindestens zwei Vergleichseinheiten zur Überwachung des Synchronisationszustands der redundant ausgelegten Prozessoren jedes Prozessorpaares und zur Erkennung eines Synchronisationsfehlers, mindestens eine Peripherieeinheit, mindestens eine Schaltmatrix, welche Zugriffe eines Prozessors oder eines Prozessorpaars auf Speicher und/oder mindestens ein Peripherieeinheit ermöglicht oder sperrt, und mindestens eine Fehlerbehandlungseinheit, welche eingerichtet ist, Signale der zwei Vergleichseinheiten zu empfangen und die mindestens eine Schaltmatrix anzusteuern, um einen Zugriff eines Prozessors oder Prozessorkerns oder eines Prozessorpaars auf mindestens einen Speicher und/oder die Peripherieeinheiten (wahlweise komplett oder selektiv zu verhindern, umfasst, wobei die Prozessorpaare im fehlerfreien Betrieb verschiedene Programme zur Bereitstellung von Funktionen ausführen können und bei Auftreten eines Fehlers das fehlerfreie Prozessorpaar zumindest einige Funktionen des fehlerbehafteten Prozessorpaars übernimmt und das Kontrollrechnersystem mindestens zwei getrennte Schaltmatrizen umfasst, wobei die erste Schaltmatrix mit einer ersten Peripheriebrücke und mindestens einem ersten Speicher verbunden ist, während die zweite Schaltmatrix mit einer zweiten Peripheriebrücke und mindestens einem zweiten Speicher verbunden ist und folgende Schritte durchgeführt werden:
- Übertragen von Daten zwischen der ersten Schaltmatrix und dem ersten Speicher, zwischen der zweiten Schaltmatrix und dem zweiten Speicher, zwischen der ersten Schaltmatrix und der ersten Peripheriebrücke und zwischen der zweiten Schaltmatrix und der zweiten Peripheriebrücke,
- Vergleich der übertragenen Daten zwischen der ersten Schaltmatrix und dem ersten Speicher mit den übertragenen Daten zwischen der zweiten Schaltmatrix und dem zweiten Speicher,
- Vergleich der übertragenen Daten zwischen der ersten Schaltmatrix (1013) und der ersten Peripheriebrücke und den übertragenen Daten zwischen zweiter Schaltmatrix und zweiter Peripheriebrücke.

Gemäß einer Ausführungsform werden für die Sicherheit der vom Kontrollrechner angesteuerten Vorrichtung kritische Funktionen unabhängig vom Auftreten eines Fehlers ausgeführt.

Gemäß einer Ausführungsform werden bei Auftreten eines Fehlers nicht sicherheitskritische Funktionen zumindest teilweise nicht mehr bereitgestellt.

Gemäß einer Ausführungsform werden bei Auftreten eines Fehlers Zugriffe des fehlerbehafteten Prozessors oder Prozessorpaars auf Peripherie gesperrt.

Gemäß einer Ausführungsform führt nach Auftreten eines Fehlers das fehlerbehaftete Prozessorpaar ein Diagnoseprogramm aus.

Gemäß einer Ausführungsform werden aufgetretene Fehler klassifiziert, wobei zumindest zwischen transienten und permanenten Fehlern unterschieden wird.

Gemäß einer Ausführungsform wird nach Auftreten eines permanenten Fehlers das fehlerbehaftete Prozessorpaar dauerhaft deaktiviert.

Gemäß einer Ausführungsform können beide Prozessorpaare erneut verschiedene Programme ausführen, wenn das fehlerbehaftete Prozessorpaar das Diagnoseprogramm ohne Erkennung eines dauerhaften Fehlers durchlaufen hat.

Gemäß einer Ausführungsform protokolliert die Fehlerbehandlungseinheit das Auftreten von Fehlern in einem nichtflüchtigen Speicher.

Gemäß einer Ausführungsform wird ein Prozessorpaar dauerhaft deaktiviert, wenn Anzahl und/oder Häufigkeit der aufgetretenen Fehler einen vorgegebenen Schwellwert überschreitet.

Gemäß einer Ausführungsform kann eines der oben beschriebenen Kontrollrechnersysteme in einem Kraftfahrzeug verwendet werden, insbesondere um ein Bremssystem zu steuern oder zu regeln.

Gemäß einer oder mehrerer Ausführungsformen wird ein Steuerungsverfahren bereitgestellt. Das Steuerungsverfahren umfasst die synchrone Abarbeitung je eines sicherheitsrelevanten Softwareprogramms durch ein erstes und einen zweites Prozessorpaar, die über einen Multiplexer mit wenigstens einer anzusteuernden peripheren Einheit verbunden sind, wobei nur einer der beiden Prozessor die periphere Einheit zu einem bestimmten Zeitpunkt ansteuert. Das synchrone Abarbeiten des Steuerprogramms wird durch eine Vergleichseinheit überwacht. Ein Synchronisationsfehlersignal wird ausgegeben, wenn die beiden Prozessorpaare desynchronisiert sind. Nach Ausgabe eines Synchronisationsfehlersignals wird zunächst die Abarbeitung des Programms durch die beiden Prozessorpaare unterbrochen. Dann wird ein Test zur Überprüfung, ob einer der beiden Prozessorpaare fehlerhaft ist, durchgeführt. Wenn beide Prozessorpaare fehlerfrei sind, wird die synchrone Abarbeitung des Programms durch die beiden Prozessorpaare fortgesetzt. Wenn einer der beiden Prozessorpaare dagegen als fehlerhaft erkannt wurde, werden der Multiplexer und die Vergleichseinheit in der Weise konfiguriert, dass keine weitere Kommunikation mit dem fehlerbehafteten Prozessor und kein weiteres Überwachen durch die Vergleichseinheit erfolgen und dass der fehlerfreie Prozessor die periphere Einheit ansteuert. Die Abarbeitung beider sicherheitsrelevanter Softwareprogramme wird durch das fehlerfreie Prozessorpaar fortgesetzt. Wenn beide Prozessoren fehlerhaft sind, erfolgt eine Abschaltung der Steuerung.

Gemäß einer oder mehrerer Ausführungsformen umfasst der Test die gleichzeitige Ausführung wenigstens eines Testprogramms durch beide Prozessoren, wobei ein Prozessor als fehlerhaft angesehen wird, wenn wenigstens eine der folgenden Bedingungen erfüllt ist:
- der Prozessor hat das Testprogramm nicht innerhalb einer ersten Zeitdauer T1 abgearbeitet,
- der Prozessor hat das Testprogramm nicht erfolgreich abgearbeitet,
- der Prozessor ist nach Ablauf der ersten Zeitdauer T1 für eine zweite Zeitdauer T2 nicht in den Ruhezustand übergegangen.

Damit soll sichergestellt werden, dass nicht nur die richtige oder falsche Abarbeitung berücksichtigt wird, sondern auch, ob die Prozessoren den Test innerhalb einer vorgegebenen Zeit abgearbeitet haben. Die Überprüfung des Ruhezustands dient dazu festzustellen, ob ein Prozessor, obwohl er keine Instruktionen abarbeitet, trotzdem Daten ausgibt. Dies weist ebenfalls auf einen fehlerbehafteten Prozessor hin.

Gemäß einer oder mehrerer Ausführungsformen wird der Synchronisationsfehler bewertet und einem Fehlertyp zugeordnet, wobei zur Überprüfung der Prozessoren wenigstens ein Testprogramm in Abhängigkeit vom Fehlertyp ausgewählt wird. Damit lassen sich ein oder ggf. mehrere fehlerspezifische Testprogramme auswählen. Weitere Ausführungsformen, Modifikationen und Vorteile sind in der nachfolgenden Beschreibung, Zeichnungen und in den Ansprüchen beschrieben. Die Erfindung wird nun an Hand konkreter in den Figuren dargestellter Ausführungsbeispiele beschrieben. Diese sollen jedoch nicht als einschränkend ausgelegt werden. Für den Fachmann ergeben sich aus der nachfolgenden Beschreibung weitere Modifikationen, die vom Schutzbereich mit umfasst sein sollen.
Figur 1 zeigt ein Kontrollrechnersystem in Form einer Steuerungsvorrichtung gemäß einer Ausführungsform im Normalbetrieb und Figur 2 das Kontrollrechnersystem (Steuerungsvorrichtung) bei Ausfall eines Prozessors.
Figur 3 zeigt ein Kontrollrechnersystem in Form einer Steuerungsvorrichtung gemäß einer Ausführungsform.
Figur 4 zeigt ein Kontrollrechnersystem in Form einer Steuerungsvorrichtung gemäß einer Ausführungsform.
Figur 5 zeigt ein Kontrollrechnersystem in Form einer Steuerungsvorrichtung gemäß einer Ausführungsform.
Figur 6 zeigt den Ablauf eines Steuerungsprogramms gemäß einer Ausführungsform.
Figur 7 zeigt eine Architektur mit zwei Prozessoren.
Figur 8 zeigt eine Architektur mit einer Aufteilung von Peripherie-Modulen in zwei Gruppen A und B.
Figur 9 zeigt ein Kontrollrechnersystem.
Figur 10 zeigt ein Kontrollrechnersystem gemäß einer Ausführungsform.
Figur 11 zeigt einen Ablaufplan für ein Verfahren zur Fehlerbehandlung gemäß einer Ausführungsform.
Figur 12 zeigt ein weiteres Kontrollrechnersystem.
Figur 13 zeigt ein Kontrollrechnersystem gemäß einer Ausführungsform.
Figur 14 zeigt das erfindungsgemäße Kontrollrechnersystem in der Architektur von Figur 13 mit ausgeschaltetem Prozessorkern 2B nach erfolgter Wiederherstellung.
Figur 15 zeigt das erfindungsgemäße Kontrollrechnersystem in der Architektur von Figur 13 mit ausgeschalteten Prozessorkernen 1A und 2B nach erfolgter Wiederherstellung.
Figur 16 zeigt das erfindungsgemäße Kontrollrechnersystem in der Architektur von Figur 13 mit ausgeschalteten Prozessorkernen 1B und 2B nach erfolgter Wiederherstellung.
Figur 17 zeigt ein Kontrollrechnersystem gemäß einer Ausführungsform.
Figur 18 zeigt einen Ablaufplan für ein Verfahren zur Fehlerbehandlung gemäß einer Ausführungsform.
Figur 19 zeigt einen Ablaufplan für ein Verfahren zur Fehlerbehandlung gemäß einer Ausführungsform.
Figur 20 zeigt die Architektur von Figur 17 mit ausgeschaltetem Prozessorkern 2B nach Wiederherstellung.
Figur 21 zeigt die Architektur von Figur 17 mit ausgeschalteten Prozessorkernen 1B und 2B nach Wiederherstellung.
Figur 22 zeigt die Architektur von Figur 17 mit ausgeschalteten Prozessorkernen 1A, 2A und 1B nach Wiederherstellung.
Figur 23 zeigt die Architektur von Figur 17 mit ausgeschalteten Prozessorkernen 1A und 2B nach Wiederherstellung.
Figur 24 zeigt die Architektur von Figur 17 mit ausgeschaltetem Datenspeicher 21 nach Wiederherstellung.

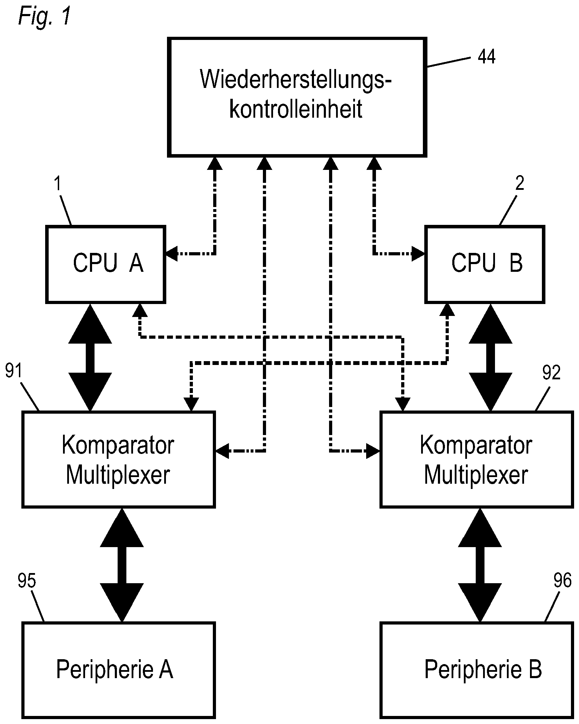

Figur 1 zeigt schematisch ein Kontrollrechnersystem oder eine Steuerungsvorrichtung mit einem ersten und einem zweiten Prozessor 1, 2 und einem ersten und zweiten Multiplexer 91, 92. Jeder der Multiplexer 91, 92 bildet eine Einheit mit jeweils einer Vergleichseinrichtung, die in den Figuren als Komparator bezeichnet ist. Jeder der Multiplexer 91, 92 ist mit jeweils einer peripheren Einheit 95, 96 verbunden und ermöglicht einen wahlweisen Zugriff der Prozessoren 1, 2 auf die peripheren Einheiten 95, 96. Eine Widerherstellungskontrolleinheit 44 ist sowohl mit den beiden Prozessoren 1, 2 als auch mit den Multiplexern 95, 96 verbunden.

Bei den Prozessoren 1, 2 kann es sich auch um Prozessorkerne handeln.

Die in Figur 1 dargestellten fetten Pfeile zeigen den tatsächlich durch die Multiplexer 91, 92 vermittelten Datenfluss von den Prozessoren 1, 2 zu den peripheren Einheiten 95, 96. Prozessor 1 kommuniziert mit peripherer Einheit 95 und steuert diese und Prozessor 2 kommuniziert mit peripherer Einheit 2 und steuert diese. Prozessor 1, Multiplexer/Komparator 91 und periphere Einheit 95 bilden hier einen Zweig A, während Prozessor 2, Multiplexer/Komparator 92 und periphere Einheit 96 einen Zweig B bilden. Allerdings bestehen kreuzweise Kommunikationspfade und zwar einerseits zwischen Prozessor 2 und Multiplexer/Komparator 91 und andererseits zwischen Prozessor A und Multiplexer/Komparator 92.

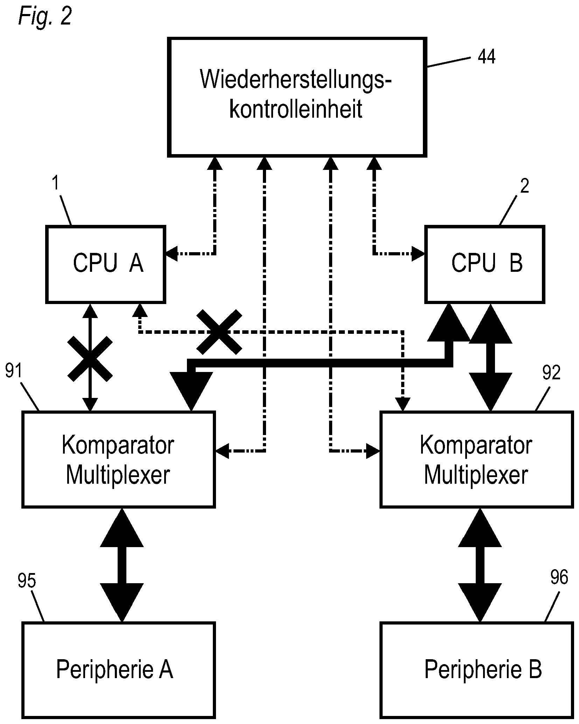

Die Komparatoren 91, 92 vergleichen jeweils, ob die Prozessoren synchron zueinander arbeiten, d.h. ob sie zeitgleich die gleichen Ergebnisse ausgeben. Ist dies nicht der Fall, liegt ein Synchronisationsfehler vor. In diesem Fall werden die Prozessoren getestet und in Abhängigkeit davon die Steuerungseinrichtung umkonfiguriert. Dies ist in Figur 2 schematisch dargestellt.

In Figur 2 wurde angenommen, dass der Test, der von der Wiederherstellungskontrolleinheit 44 überwacht und ausgewertet wird, ergeben hat, dass Prozessor 1 defekt ist. In diesem Fall werden die beiden Multiplexer 91, 92 umkonfiguriert und zwar so, dass beide Multiplexer 91, 92 die Ausgaben von Prozessor 1 ignorieren. Gleichzeitig gestattet nun Multiplexer 91 eine Kommunikation zwischen Prozessor 2 und peripherer Einheit 95. Prozessor 2 steuert nun die peripheren Einheiten sowohl im Zweig A als auch in Zweig B an. Prozessor 2 muss dazu nicht notwendigerweise anders programmiert werden, da ja Prozessor 2, für Vergleichszwecke, bereits im Normalzustand das Steuerungsprogramm für die periphere Einheit 95 (Zweig A) ausgeführt hatte. Der Unterschied ist nur, dass er jetzt auch "schreibend" auf periphere Einheit 95 zugreifen kann. Weiterhin wird die Vergleichsfunktion der Komparatoren inaktiviert, da diese nun keine Eingaben mehr von Prozessor 1 erhalten. Dies ist deswegen erforderlich, damit die Komparatoren 91, 92 keine weiteren Fehlersignale ausgeben.

Im Ergebnis kann die Abarbeitung des Steuerprogramms umfassend Steuerprogramme für periphere Einheit 95 und periphere Einheit 96, wieder fortgesetzt werden. Dadurch wird die Verfügbarkeit des Systems erhöht.

Falls der Test ergeben hat, dass beide Prozessoren 1, 2 fehlerfrei sind, wird der Zustand von Figur 1 wieder eingenommen. Für den Fall, dass beide Prozessoren defekt sind, erfolgt eine Abschaltung des Systems.

Die in den Figuren 1 und 2 gezeigte Vorgehensweise ist insbesondere bei nicht redundant ausgelegten peripheren Einheiten von Vorteil.

Die in Figuren 1 und 2 gezeigte Architektur umfasst eine Aufteilung von Peripherie-Modulen in zwei Gruppen A und B. Jede Gruppe umfasst mindestens einen Prozessor 1, 2, einen hier nicht gezeigten Busumschalter (Bus Matrix, Bus Crossbar) und anzusteuernde Peripheriemodule 95, 96. Speichermodule können in einer Gruppe oder in beiden Gruppen implementiert werden. Die Seite A wird tatsächlich (also physikalisch) immer vom Prozessor 1 (Prozessor A) angesteuert. Die Seite B wird tatsächlich immer vom Prozessor 2 (Prozessor B) angesteuert. Daten der Peripherie-Modulen 95 können quer über die Multiplexer 91, 92 an die Seite B weiter gereicht werden. Der Prozessor 1 kann auf ähnliche Weise Daten von Peripherie-Modulen 96 auslesen.

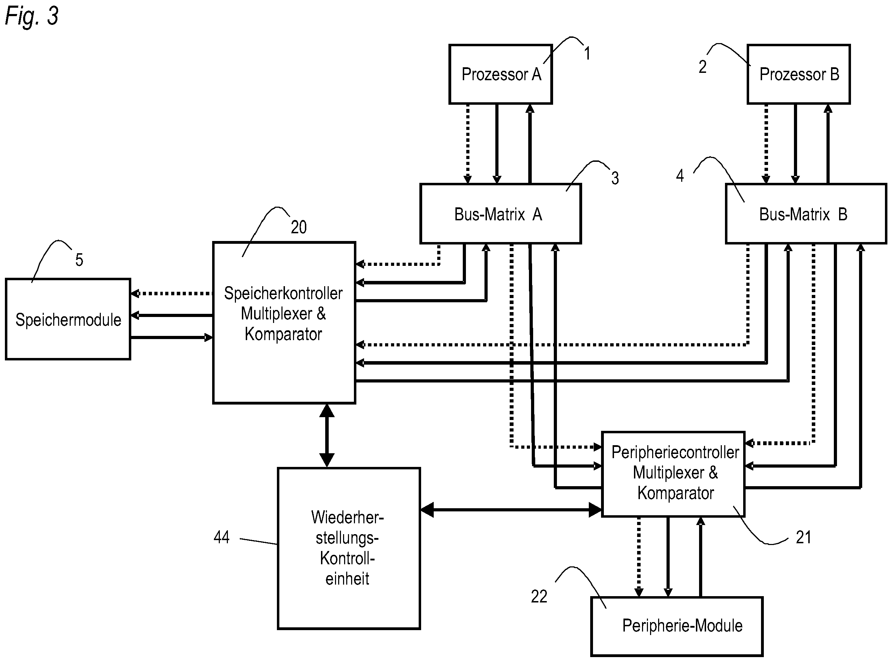

Figur 3 zeigt eine Ausführungsform, bei der eine periphere Einheit 22, die dort als periphere Module bezeichnet ist, redundant durch zwei Prozessoren 1 und 2 angesteuert ist, wobei zu einem vorgegebenen Zeitpunkt tatsächlich nur einer der beiden Prozessoren die Einheit 22 ansteuert. Dies erfolgt über einen Multiplexer 21. Eine weitere periphere Einheit 5, bei der es sich um eine gemeinsame interne periphere Einheit handeln kann, beispielsweise ein Speicher 5, ist über einen Multiplexer 20 mit den beiden Prozessoren 1, 2 verbunden. Die Prozessoren 1, 2 selbst sind jeweils über eine Bus-Matrix 3, 4 mit den Multiplexern 20, 21 verbunden. Auch in dieser Ausführungsform können die Multiplexer 20, 21, die in Einheit mit jeweiligen Vergleichseinheiten (Komparatoren) vorliegen, im Fehlerfall geeignet konfiguriert werden, um die Steuerung verfügbar zu halten.

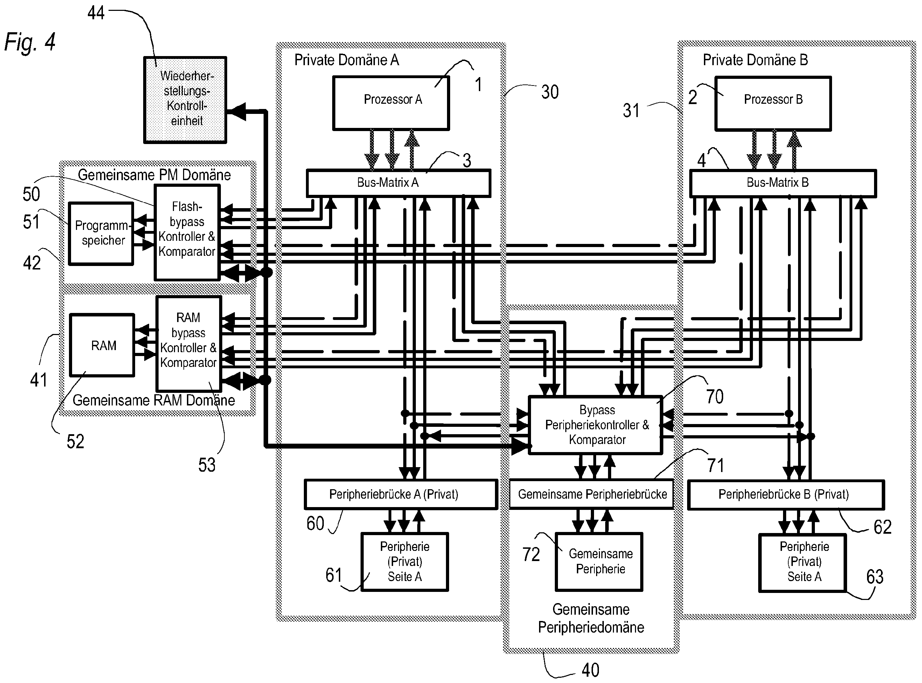

Gemäß einer oder mehrerer Ausführungsformen erfolgt eine klare Trennung zwischen gemeinsam verwendeten und privaten redundanten Bereichen der Steuerung. Jedem Prozessor 1, 2 werden private Komponenten bzw. Einheiten zugeordnet, die nur von ihm angesteuert werden. Die privaten Komponenten (in Figur 4 die beiden peripheren Einheiten 61, 62) sind vorzugsweise redundant, um möglichst eine perfekte Symmetrie der redundanten privaten Bereiche nachbilden zu können. Aus Kostengründen können einige Komponenten, wie beispielsweise der Programmspeicher, nur einmal und zwar im gemeinsam benutzten Bereich, implementiert werden. Im Lockstep-Betrieb arbeiten die zwei Prozessoren 1, 2 synchron. Die tatsächliche Ansteuerung der gemeinsam verwendeten Komponenten bzw. peripheren Einheiten kann jeder der zwei redundanten Prozessoren übernehmen und wird tatsächlich zu einem bestimmten Zeitpunkt nur von einem Prozessor durchgeführt, während der andere Prozessor aufgrund des Lockstep-Betriebs alle Daten rechtzeitig bekommt.

Nach Erkennung eines Verriegelungsschrittfehlers (lockstep error) soll jeder Prozessor 1, 2 während eines Zeitintervalls T1 möglichst in dem zugewiesenen privaten Bereich aktiv bleiben und keine sicherheitsrelevante Funktion mit Auswirkungen außerhalb der Architektur ausführen. Das heißt insbesondere die Ansteuerung von externen peripheren Einheiten bzw. Komponenten, die eine Wirkung nach Außen zeigen, wird unterbrochen.

Für die notwendigen Zugriffe auf nicht redundante Komponenten wie beispielsweise auf den Programmspeicher wird ein Multiplexbetrieb für die zwei redundanten Prozessoren 1, 2 im Zeitintervall T1 ermöglicht. Jeder Verriegelungsschrittfehler (lockstep error) löst eine Unterbrechung des Programmsablaufs (Interrupt) aus. In der Interrupt-Routine werden die Prozessoren 1, 2 unabhängig voneinander die gleichen Testprogramme ausführen und Testergebnisse für eine spätere Prüfung mittels eines autonomen Hardware-Überwachungsmoduls, in den Figuren die Wiederherstellungskontrolleinheit 44, ablegen.

Manche Testprogramme können aus dem Fehlerkontext abgeleitet werden. Beispielsweise wird der aufgetretene Fehler klassifiziert und einem Fehlertyp zugeordnet und diese Zuordnung für die Auswahl des oder der jeweiligen Testprogramme genutzt.

Jeder Prozessor soll die Abarbeitung der Unterbrechung sanft ohne Rücksprung verlassen. Hintergrund ist, dass das Testprogramm durch Interrupt gestartet wurde und nach Ablauf des Testprogramms die Prozessoren 1, 2 normalerweise das Steuerungsprogramm, das auf Grund des Interrupts unterbrochen wurde, wieder fortsetzen wollen. Dies soll unterbunden werden und die Prozessoren 1, 2 sollen stattdessen in einen Ruhezustand übergehen. Ob dies erfolgt, ist ebenfalls Teil des Tests.

Anschließend soll jeder Prozessor seine Zustandsmerkmale beispielsweise in einem vom autonomen Hardware-Überwachungsmodul (Wiederherstellungskontrolleinheit 44) lesbaren Register ablegen. Die Zeitdauer wird anhand eines Zeitgebers des autonomen Hardware-Überwachungsmoduls gemessen.

Nach dieser unklaren Zeit (außerhalb des Lockbetriebes) sollen die redundanten Prozessoren einen Leerlaufbetrieb (Ruhezustand) für eine Zeitdauer T2 aufweisen. Falls ein Prozessor im Zeitfenster T2 auf eine Komponente wie beispielsweise ein Speicher- oder Peripheriemodul zugreift, wird er automatisch von der Wiederherstellungskontrolleinheit 44 vom Rückgewinnungsvorgang ausgeschlossen. Nach dem Zeitfenster T2 vergleicht die Wiederherstellungskontrolleinheit 44 die Testergebnisse der zwei Prozessoren 1, 2 mit den in Hardware vorprogrammierten Werten. Falls die Testergebnisse eines Prozessors mit den vorgegebenen Werten nicht übereinstimmen, wird der entsprechende Prozessor für den laufenden Synchronisationsversuch nicht mehr betrachtet. Dementsprechend müssen auch die gespeicherten Zustandsmerkmale von den Prozessoren 1, 2 für eine Rückgewinnung geeignet sein. Im Falle einer positiven Bewertung der Ergebnisse wird die Wiederherstellungskontrolleinheit 44 mittels eines Interrupts eine Rückkehr in den Lockstep-Betrieb zustande bringen. Wenn nur ein Prozessor alle Tests erfolgreich ausgeführt hat, wird er die ihm zugeordneten Peripherie-Module und alle gemeinsam verwendeten Komponenten ansteuern.

Dieser Notfallbetrieb erhöht die Verfügbarkeit des Systems und läuft mit einer reduzierten Sicherheitsstufe.

Figur 4 zeigt eine weitere Ausführungsform, die auf der von Figur 3 aufbaut. Die Architektur der Steuerungsvorrichtung wird in zwei private Bereiche 30 und 31, die als Bereiche A und B bezeichnet werden, und einen gemeinsamen Bereich 40 aufgeteilt. Die privaten Bereiche beinhalten Module bzw. periphere Einheiten und Komponenten, die physikalisch redundant sind. Die Wiederherstellungskontrolleinheit 44 in Form eines Hardware-Moduls dient zur sicheren Rückgewinnung der Synchronisation nach einem Verriegelungsschrittfehler bzw. Gleichschrittfehler (engl.: lockstep error). Wenn ein Verriegelungsschrittfehler auftritt, wird die Wiederherstellungskontrolleinheit 44 alle Zugriffe auf sicherheitsrelevante Peripherie-Module bzw. Einheiten sperren. Bei diesen Einheiten handelt es sich insbesondere um die gemeinsame Peripherie 72 und, als Beispiel, um die redundant vorhandenen peripheren Einheiten 61 und 63. Diese sind über jeweilige Peripheriebrücken 60, 71, und 62 angeschlossen.

Der Verriegelungsschrittfehler löst eine Unterbrechung (Interrupt) des Programmablaufs aus. In der darauf folgenden Abarbeitung der Interrupt-Routine kann jeder Prozessor 1, 2 nur auf Module zugreifen, die sich in seinem zugeordneten privaten Bereich befinden und keine sicherheitsrelevanten Teilfunktionen ausführen. Weiterhin kann der Zugriff auf nicht sicherheitsrelevante Komponenten 41, 42 im Multiplexbetrieb ermöglicht werden. Solche Komponenten 41, 42 sind beispielsweise eine gemeinsame Programm-Domäne 42 und eine gemeinsame RAM-Domäne. Komponente 42 verfügt über ein Modul 50, welches einen Multiplexer, einen Kontroller und einen Komparator umfasst, und den eigentlichen Programmspeicher 51. Komponente 41 verfügt über ein Modul 53, welches einen Multiplexer, einen Kontroller und einen Komparator umfasst, und den Speicher 52, der hier als RAM ausgebildet ist.

Im privaten Peripherie-Bereich wird jeweils ein kleiner Adressraum für Testzwecke des passenden Prozessors reserviert. Die Interrupt-Routine dient dazu, die Integrität der Architektur und vor allem der Prozessoren zu prüfen. Am Ende der Interrupt-Abarbeitung sollen die Prozessoren die berechneten Ergebnisse im für Testzwecke reservierten Adressbereich ablegen. Korrekte Ergebnisse sind im Vorfeld in der Wiederherstellungskontrolleinheit 44 gespeichert. Die Interrupt-Routine besteht aus Testprogrammen, wobei jedes Testprogramm innerhalb eines bestimmten Zeitintervalls das korrekte Ergebnis liefern soll. Nach einer vorgegebenen Zeitdauer überprüft die Wiederherstellungskontrolleinheit 44 die Korrektheit der von den Prozessoren abgelegten Ergebnisse. Die Rückgewinnung des Lockstep-Betriebs setzt voraus, dass alle von der Wiederherstellungskontrolleinheit 44 zu prüfenden Ergebnisse korrekt sind. Ansonsten wird nur der Prozessor, der korrekte Ergebnisse aufweist, für die laufende Applikation weiter aktiv bleiben.

Da die Interrupt-Routine nicht im Lockstep-Betrieb läuft, wird das Modul 50 so konfiguriert, dass beide Prozessoren 1, 2 im Multiplex-Betrieb auf den Programmspeicher 51 zugreifen können.

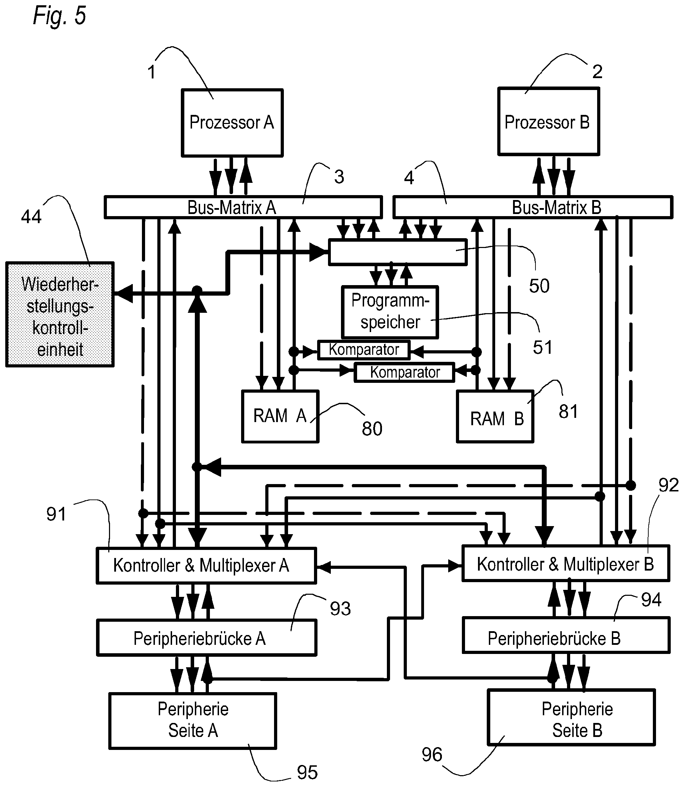

Figur 5 zeigte eine Ausführungsform in Erweiterung der Figuren 1 und 2. Hierbei arbeitet die Wiederherstellungskontrolleinheit 44 ähnlich wie in Figur 4. Falls ein Prozessor 1, 2 keine korrekten Ergebnisse für die Rückgewinnung des Lockstep-Betriebs liefert, wird die Wiederherstellungskontrolleinheit 44 die entsprechenden Peripherie-Controller 91 oder 92, welche hier die Multiplexer und Komparatoren bilden, so konfigurieren, dass die darunter liegenden Peripherie-Module bzw. Einheiten 95, 96 vom anderen Prozessor angesteuert werden.

Die Architektur in Figur 5 weist auch zwei redundante RAM Module 80, 81 auf. Wenn der Verriegelungsschrittfehler (engl.: lockstep error) durch einen Fehler in RAM hervorgerufen wurde, wird die fehlerhafte RAM Adresse gespeichert. In der Interrupt-Routine wird diese Adresse überprüft. Wenn der RAM Fehler nicht korrigierbar ist, wird die Wiederherstellungskontrolleinheit 44 die betroffene Seite A oder B (also Prozessor und RAM) nicht wieder in die aktive Ansteuerung einbinden. Anschließend wird die Wiederherstellungskontrolleinheit 44 dafür sorgen, dass die Peripherie-Module, die bisher von dem nun fehlerhaften Prozessor bzw. RAM angesteuert wurden, nun durch den Prozessor von der anderen Seite angesteuert werden.

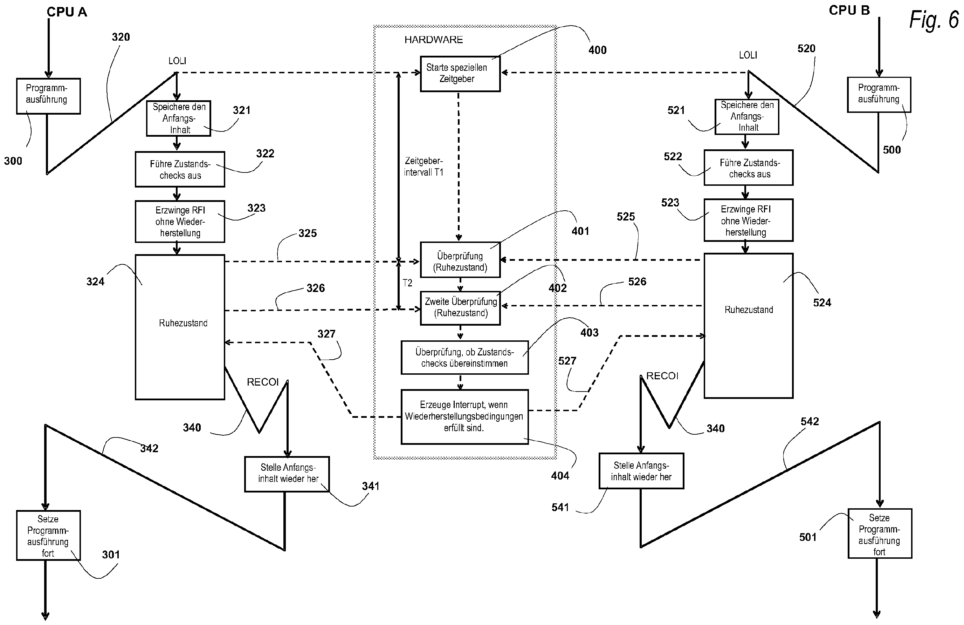

Figur 6 zeigt schematisch den Ablauf eines Steuerungsprogramms. Nach Auftreten eines Synchronisationsfehlers wird die Programmausführung 300, 500 durch die jeweiligen Prozessoren mittels eines Interrupts (LOLI, Lockstep loss interrupt) unterbrochen und der jeweilige Zustand (Anfangsinhalt) in 321, 521 gespeichert. Der Interrupt führt gleichzeitig zur Aktivierung der Wiederherstellungskontrolleinheit, hier als Hardware bezeichnet ist.

Die Wiederherstellungskontrolleinheit startet einen Zeitgeber 400. Die Prozessoren führen dann in Schritt 322, 522 die von der Wiederherstellungskontrolleinheit vorgegebenen Tests aus, wobei nach Beenden der Tests eine Interruptfreie Rückkehr in 323, 523 erzwungen wird (RFI, Return from Interrupt). Danach sollen die Prozessoren in einen Ruhezustand übergehen.

Die Wiederherstellungskontrolleinheit prüft, ob die Tests innerhalb der Zeitdauer T1 abgearbeitet wurden (325, 525) und ob die Prozessoren in den Ruhezustand übergegangen sind (401). Nach einer vorgegebenen Zeitdauer T2 prüft die Wiederherstellungskontrolleinheit in 402, 326, 526, ob die Prozessoren sich immer noch im Ruhezustand befinden.

Dann werden die Testergebnisse überprüft. Die Wiederherstellungsbedingungen 404 sind, dass die Testergebnisse fehlerfrei sind, dass der jeweilige Prozessor bis zum Ablauf der Zeitdauer T1 in den Ruhezustand übergegangen war, und dass der Prozessor sich auch noch nach Ablauf der Zeitdauer T2 im Ruhezustand befindet. Falls dies der Fall für beide Prozessoren ist, wird ein Recover Interrupt (RECOI) für beide Prozessoren ausgelöst, sonst nur für den fehlerfreien Prozessor, und die Anfangszustand wieder hergestellt (341, 541). Im letzten Fall rekonfiguriert die Wiederherstellungskontrolleinheit die Steuerungsvorrichtung, wie oben erläutert. Es schließt sich die Fortsetzung des Programms an.

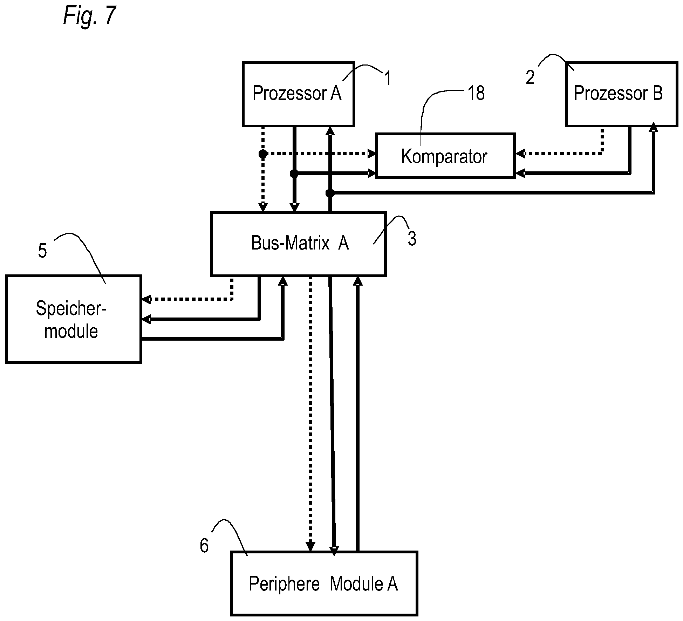

Figur 7 zeigt eine herkömmliche Architektur mit zwei Prozessoren 1 und 2, wobei der Prozessor 2 zur Überwachung vom Prozessor 1 dient. Die gesamte Ansteuerung von Peripheriemodulen sowie alle Speicherzugriffe erfolgen über den Prozessor 1. Diese Architektur ist für die Beherrschung von aus dem Verlust der Synchronisation resultierenden Fehlern (Lockstep Failures) ungeeignet.

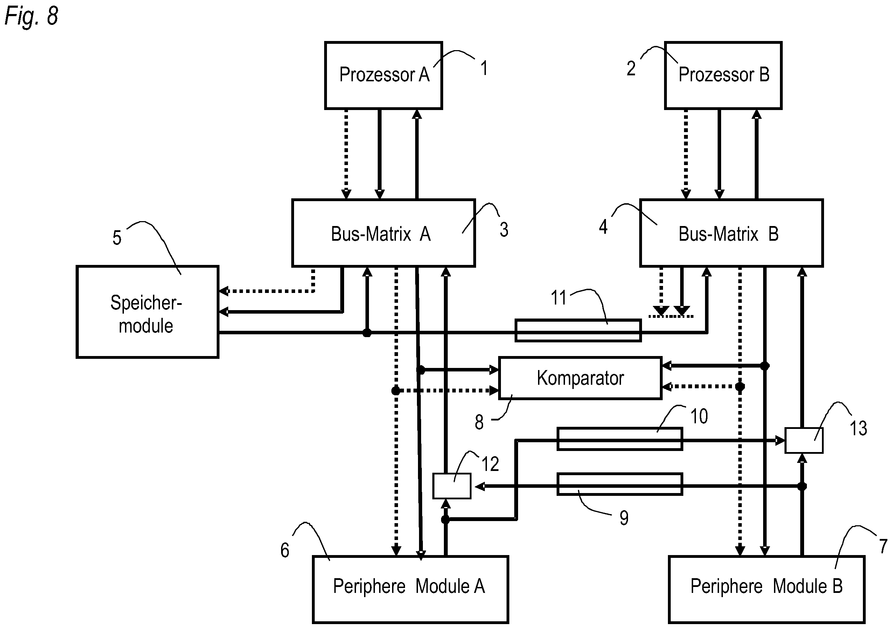

Figur 8 zeigt eine herkömmliche Architektur mit einer Aufteilung von Peripherie-Modulen in zwei Gruppen A und B. Jede Gruppe umfasst mindestens einen Prozessor 1,2, einen Busumschalter (Bus Matrix, Bus Crossbar) 3,4 und Peripheriemodule 6,7. Speichermodule 5 können in einer Gruppe oder in beiden Gruppen implementiert werden und über ein Bypass-Modul 11 angesteuert werden. Die Seite A wird tatsächlich (also physikalisch) immer vom Prozessor 1 angesteuert. Die Seite B wird tatsächlich immer vom Prozessor 2 angesteuert. Daten von Peripherie-Modulen 6 können quer über ein Bypass-Modul 10 und Datenmultiplexer 12 an die Seite B weiter gereicht werden. Der Prozessor 1 kann auf ähnliche Weise Daten von Peripherie-Modulen 6 auslesen (über Bypass-Modul 9 und Datenmultiplexer 13). Dieser Mechanismus, mit dem ein Prozessor Peripherie-Daten von der anderen Seite auslesen kann, funktioniert nur solange, wie die zwei Prozessoren 1 und 2 synchron (in lockstep) zueinander arbeiten. Die Überwachung erfolgt durch einen Komparator 8. Wenn der Prozessor 1 beispielsweise außer Betrieb ist, kann die ganze Seite A (also samt Peripherie-Module und Speicher auf dieser Seite) nicht mehr angesteuert werden. Somit ergibt sich eine schlechte Unterstützung einer hohen Verfügbarkeit. Wenn die zwei Prozessoren nicht mehr synchron arbeiten, können sie nur noch zurückgesetzt werden. Für viele sicherheitsrelevante Applikationen ist das Zurücksetzen (Reset) von Prozessoren nicht erlaubt, solange die Ursache des Verlusts der Synchronisation nicht eindeutig festgestellt wird.

Im Zusammenhang mit Figuren 1 bis 8 wurden Zwei-Prozessor-Steuerungseinrichtungen beschrieben. Nachfolgend werden Steuerungseinrichtungen mit mehreren Prozessoren bzw. Prozessorkernen anhand von Kontrollrechnersystemen beschrieben. Die Zahl der Prozessoren bzw. Prozessorkernen ist jedoch nicht auf die konkret angegebene Anzahl beschränkt, sondern kann den Bedürfnissen nach beliebig sein.

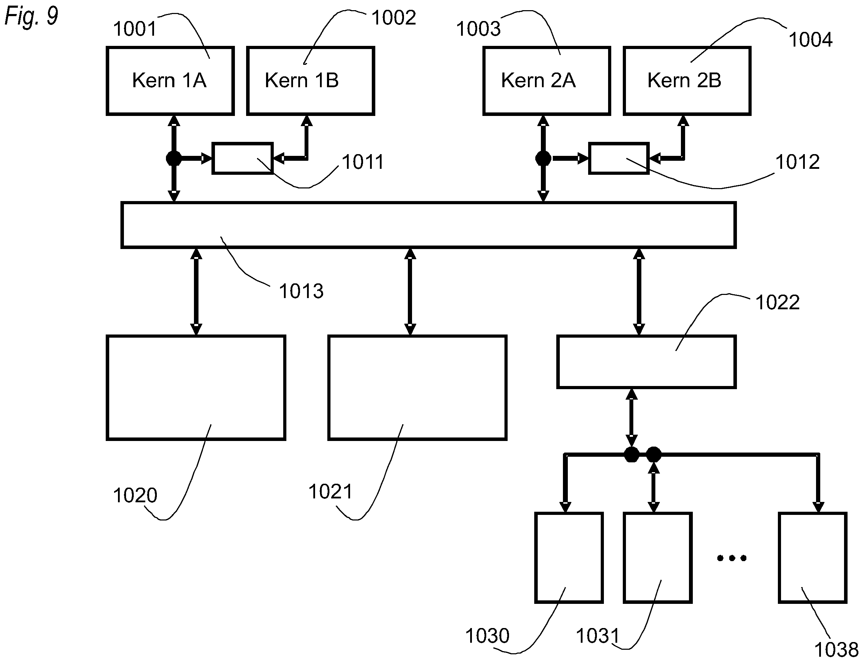

In Figur 9 ist ein Kontrollrechnersystem (Steuerungseinrichtung) gezeigt. Es umfasst zwei Prozessorpaare 1001&1002 (oder Kerne 1A&1B) und 1003&1004 (oder Kerne 2A&2B), zwei Vergleichseinheiten 1011 und 1012, eine Schaltmatrix 1013 (die auch als Schaltelement bezeichnet wird), Speicher 1020 und 1021 sowie eine Peripheriebrücke 1022, an die mehrere Peripherieeinheiten 1030, 1031,...1038 angeschlossen sind. Jedes Prozessorpaar kann zwei separate Prozessoren umfassen oder ein Prozessor mit zwei Kernen sein. In weiteren Ausführungsformen kann die Zahl der Prozessoren bzw. Kerne auch beliebig anders sein. Beispielsweise können drei oder mehr Prozessoren mit jeweils zwei Kernen, die jeweils redundant zueinander sind, verwendet werden. Grundsätzlich können aber auch drei Prozessoren zu einem redundanten Verbund zusammengeschlossen werden, wobei das Kontrollrechnersystem zwei, drei oder mehrere solcher Verbünde aufweisen kann.

Im ersten Prozessorpaar greift Prozessor 1001 (oder Kern 1A) tatsächlich auf verschiedene Ressourcen wie Speicher und Peripherieeinheiten zu. Vergleichseinheit 1011 vergleicht die Ausgangsdaten der Prozessoren 1001&1002 und leitet eingehende Daten an beide Prozessoren, wobei der überwachende Prozessor 1002 keinen Zugriff auf Speicher und Peripherie hat. Beide Prozessoren (Kerne) 1001&1002 sind identisch aufgebaut und arbeiten synchron bzw. im Lockstep-Modus, wodurch Vergleichseinheit 1011 im fehlerfreien Fall jeweils gleiche Ausgangsdaten erhält. Prozessorpaar 1003&1004 ist entsprechend aufgebaut, Prozessor 1003 greift tatsächlich auf Speicher und Peripherie zu, und Vergleichseinheit 1012 gibt eingehende Daten auch an überwachenden Prozessor 1004 weiter. Schaltmatrix 1013 ermöglicht Zugriffe der Prozessoren auf Speicher oder Peripherieeinheiten. Jeder Zugriff auf Peripherieeinheiten erfolgt über eine zentrale Peripheriebrücke 1022. Im fehlerfreien Fall stellt das Kontrollrechnersystem also zwei unabhängige Prozessoren 1001 und 1003 (Prozessorkerne 1A und 1B) zur Verfügung.

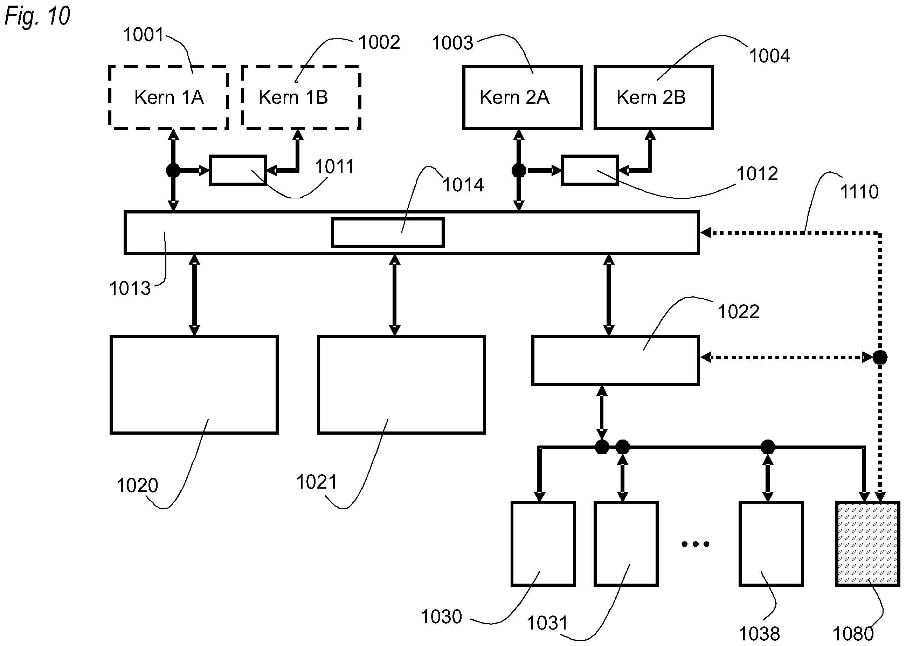

Ein Ausführungsbeispiel eines erfindungsgemäßen Kontrollrechnersystems ist in Figur 10 gezeigt. Wie das in Figur 9 gezeigte Kontrollrechnersystem umfasst es zwei Prozessorpaare 1001&1002 und 1003&1004, zwei Vergleichseinheiten 1011 und 1012, eine Schaltmatrix 1013, Speicher 1020 und 1021 sowie eine Peripheriebrücke 1022, an die mehrere Peripherieeinheiten 1030, 1031,...1038 angeschlossen sind. Daneben verfügt das erfindungsgemäße Kontrollrechnersystem über eine Fehlerbehandlungseinheit (Wiederherstellungseinheit) 1080, welche Signale der Vergleichseinheiten 1011, 1012 empfängt. Fehlerbehandlungseinheit 1080 kann Schaltmatrix 1013 und Peripheriebrücke 1022 ansteuern, um Zugriffe eines einzelnen Prozessors 1001, 1002, 1003, 1004 (oder Kerns 1A, 1B, 2A, 2B) bzw. Prozessorpaars auf Speicher und/oder Peripherieeinheiten zu verhindern. In einer bevorzugten Ausführungsform der Erfindung beinhaltet Schaltmatrix 1013 eine Überwachungseinheit 1014, welche Zugriffe nicht nur verhindern, sondern auch protokollieren kann. Bevorzugt werden die Signale der Vergleichseinheiten 1011, 1012 direkt an die Fehlerbehandlungseinheit 1080 übertragen und passieren nicht die Schaltmatrix 1013. Fehlerbehandlungseinheit 1080 ist, wie bereits weiter oben im Zusammenhang mit der Wiederherstellungskontrolleinheit beschrieben, eingerichtet, die Schaltmatrix 1013 oder die Peripheriebrücke 1022 nach Auftreten eines Fehlers geeignet umzukonfigurieren.

Tritt ein Vergleichsfehler z.B. zwischen den Prozessoren 1001 und 1002 (oder Kernen 1A und 1B des ersten Prozessorpaares) auf, so sendet die Fehlerbehandlungseinheit 1080 Steuersignale 1110 an die Schaltmatrix 1013 und Peripheriebrücke 1022. Daraufhin werden Zugriffe des Prozessorpaars 1001/1002 auf den Speicher verhindert oder protokolliert und/oder Zugriffe auf Peripherieeinheiten unterbunden. Somit wird verhindert, dass ein fehlerbehafteter Prozessor z.B. Aktuatoren ansteuert, wodurch großer Schaden entstehen könnte.

Mit anderen Worten: Die herkömmliche Architektur wird um ein Modul 1080 erweitert, das die Funktion der Wiederherstellungskontrolleinheit übernimmt. Dieses Modul 1080 wird auch als SVM-Modul (Sicherheits- und Verfügbarkeitsmodul; engl.: SAM: Safety and Availability Management Module) bezeichnet. Je nach Art des aufgetretenen Fehlers steuert SVM-Modul 1080 die Überwachungseinheit 1014 innerhalb des Schaltelements (Schaltmatrix) 1013, um dem fehlerhaften Prozessor den Zugriff auf bestimmte Peripherie-Module und RAM Speicher zu verbieten. Das SVM-Modul 1080 wird sofort benachrichtigt, wenn die Komparatoren in den Modulen (Vergleichseinheiten) 1011 und 1012 einen Fehler erkannt haben. Anhand der Fehlersignale sorgt SVM-Modul 1080 dafür, dass der betroffene Prozessorkern 1A oder 2A (Prozessoren 1001, 1002) Aktoren über Peripherie-Module nicht ansteuern kann. Mittels Steuersignale 1110 kann das SVM-Modul 1080 Zugriffe auf Peripherie-Module im Schaltelement 1013 oder in der Peripheriebrücke 1022 verhindern.

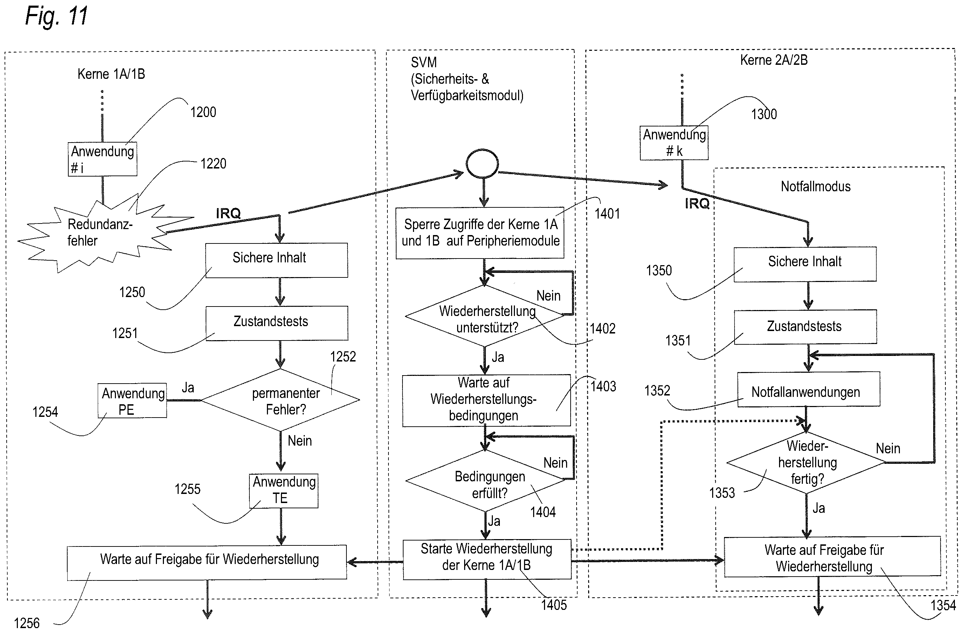

Ein Ausführungsbeispiel des erfindungsgemäßen Verfahrens zur Ansteuerung eines Kontrollrechnersystems ist in Figur 11 gezeigt, wobei die Konfiguration des Kontrollrechnersystems der anhand von Figur 10 beschriebenen entspricht.

Falls der Komparator im Modul (Vergleichseinheit) 1011 einen Fehler 1220 erkennt, wird ein Interrupt für beide Prozessorpaare 1A/1B und 2A/2B ausgelöst. Das Prozessorpaar 1A/1B verlässt die Anwendung (engl: Task) 1200 und springt in die Abarbeitung der Interrupt-Routine. Der Kontext oder Inhalt für den normalen Betrieb wird in der Stufe 1250 gespeichert, bevor das Prozessorpaar 1A/1B Überprüfungs- oder Zustandstests in der Stufe 1251 unterzogen wird. In der Abfrage 1252 überprüft das Prozessorpaar 1A/1B, ob der Fehler permanent ist. Wenn das Prozessorpaar 1A/1B einen permanenten Fehler aufweist, wird dieses Paar nicht mehr für eine Wiederherstellung in Betracht gezogen. In der Stufe 1254 wird die Fehlerart ermittelt und in einem nicht-flüchtigen Speicher wie beispielsweise einem externen EPROM abgelegt. In der Stufe 1255 werden die Signatur sowie ein Zeitstempel des transienten Fehlers abgespeichert. Falls sich der gleiche transiente Fehler wiederholt, sollen die in der Stufe 1255 abgespeicherten Daten dabei helfen, die Wiederholungsrate zu ermitteln. Eine solche Wiederholungsrate kann als Entscheidungskriterium für weitere Wiederherstellungsversuche verwendet werden. In der Stufe 1256 wartet das Prozessorpaar 1A/1B auf ein Signal des SVM-Moduls 1080, ob ein Wiederherstellungsversuch stattfinden soll.

Nach dem Auslösen des Interrupt-Signals soll das Prozessorpaar 2A/2B als fehlerfreies Prozessorpaar in den Notfall-Betrieb eintreten. Zuerst verlässt das Prozessorpaar 2A/2B die gerade ausgeführte Anwendung in 1300 und speichert den Kontext für den normalen Betrieb (Stufe 1350). Fehlerbezogene Überprüfungstests werden im Schritt 1351 durchgeführt. Im Schritt 1352 werden nur die für den Notfall-Betrieb notwendigen Programmteile (obligatorischen Softwaremodule) ausgeführt. Diese notwendigen Programmteile setzen sich aus ausgewählten Anwendungen (Tasks) zusammen, die ursprünglich unterschiedlichen Prozessorpaaren zugeordnet waren. Im Laufe des Notfall-Betriebs überprüft das Prozessorpaar 2A/2B permanent, ob ein Signal für einen Wiederherstellungsversuch freigegeben wurde. Falls die Wiederherstellung des normalen Betriebs im Schritt 1353 freigegeben, wartet das Prozessorpaar 2A/2B auf die Freigabe für den Wiederherstellungsversuch im Schritt 1354.

Nach dem Auslösen des Interrupt-Signals sperrt das SVM-Modul 1080 im Schritt 1401 sämtliche Zugriffe des fehlerhaften Prozessorpaars 1A/1B auf sicherheitsrelevante Peripherie-Module. Mit diesem Schritt soll jegliche unsichere Ansteuerung von Aktoren vermieden werden. Wenn die Wiederherstellung des normalen Betriebs nicht unterstützt werden soll, verbleibt das SVM-Modul 1080 im Schritt 1402 und Ansteuerung erfolgt nur noch durch das Prozessorpaar 2A/2B. Ansonsten wird das SVM-Modul 1080 im Schritt 1403 auf die für den Wiederherstellungsversuch notwendigen Bedingungen eingestellt, die von dem ausgefallenen Prozessorpaar geliefert werden sollen. Danach werden diese Bedingungen im Schritt 1405 überprüft. Sind die Wiederherstellungsbedingungen erfüllt, dann initiiert das SVM-Modul 1080 den Wiederherstellungsversuch mit allen Prozessorpaaren. Nach erfolgreicher Wiederherstellung steht also wieder die volle Leistung des Kontrollrechnersystems zur Verfügung, und auch nicht sicherheitskritische Komfortfunktionen werden wieder uneingeschränkt bereitgestellt.

Die Wiederherstellung, insbesondere die Überprüfung, kann gemäß dem in Figur 6 gezeigten Ablauf erfolgen.

Gemäß einer Ausführungsform wird die Ansteuerstoftware des Kontrollrechnersystems auf eventuell auftretende Fehler und deren Behandlung geeignet vorbereitet. Die Ansteuersoftware umfasst zumindest zwei Arten von Softwaremodulen, zum einen die obligatorischen und zum anderen die optionalen Softwaremodule. Die Module werden im Normalbetrieb auf beide Prozessorpaare aufgeteilt. Im Störungsfall werden die obligatorischen Softwaremodule (auch als Notfall-Module bezeichnet) von dem verbliebenen Prozessorpaar ausgeführt, die optionalen dagegen nicht oder nur eingeschränkt. Somit ist es möglich, dass das fehlerfreie Prozessorpaar auch die obligatorischen Softwaremodule des fehlerhaftem Prozessorpaars übernehmen kann. Damit können die für die Ansteuerung der Peripherie zwingend erforderlichen Softwaremodule weiterhin ausgeführt werden, ohne dass es zu einem Verlust an Redundanz kommt. Lediglich die optionalen Softwaremodule werden nicht oder nur noch teilweise ausgeführt. Dies stellt jedoch keine Sicherheitseinschränkung dar.

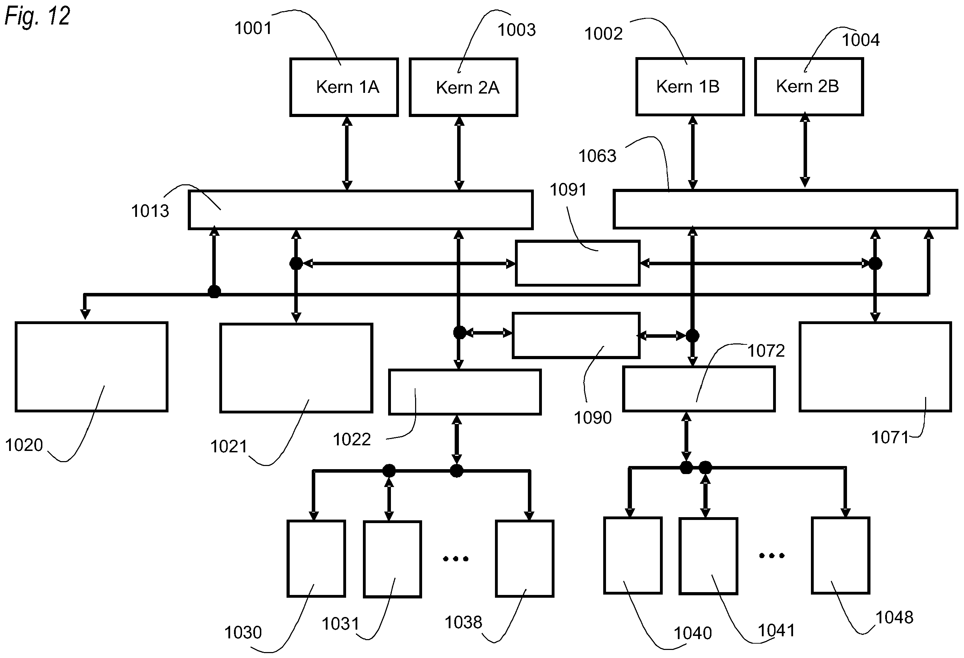

Die in Figur 12 gezeigte weitere Architektur eines Kontrollrechnersystems mit zwei Prozessorpaaren verfügt über zwei redundante Schaltelemente (oder Schaltmatrizen) 1013, 1063. Prozessorkerne 1A und 2A (Prozessoren 1001, 1003) können über Schaltelement 1013 auf Speichermodule 1020 und 1021 zugreifen. Prozessorkerne 1B und 2B (Prozessoren 1002, 1004) greifen über Schaltelement 1063 auf Speichermodule 1020 und 1071 zu. Speichermodul 1021 kann nur von den Prozessorkernen 1A und 2A verwendet werden, während Speichermodul 1071 nur den Prozessorkernen 1B und 2B zur Verfügung steht. Somit ist der aus Prozessorkernen 1A und 2A, Schaltelement 1013 und Speichermodul 1021 bestehenden Block völlig symmetrisch (redundant) zum Block mit Prozessorkernen 1B und 2B, Schaltelement 1063 und Speichermodul 1071. Speichermodul 1020 kann von allen Prozessoren ausgelesen werden. Im normalen Betrieb laufen die Prozessoren 1A und 1B synchron zueinander, so dass ein Prozessor einen Überwachungsmechanismus für den anderen bildet. Dementsprechend arbeiten auch die Prozessorkerne 2A und 2B synchron und überwachen sich gegenseitig. Die Überwachung wird mittels Komparatoren verwirklicht, die in Modulen (Vergleichseinheiten) 1091 und 1090 implementiert sind. Vergleichseinheit 1091 überwacht alle Zugriffe auf redundante Speichermodule 1021 und 1071, und Vergleichseinheit 1090 überwacht alle Peripherie-Zugriffe. Diese Architektur kann so implementiert werden, dass alle Peripherie-Module redundant sind. Beispielsweise können die Peripherie-Module 1040, 1041,...1048 redundant zu den Peripherie-Modulen 1030, 1031,...1038 sein. In diesem Fall können die Vergleichseinheit 1090 nur Komparatoren für Peripherie-Zugriffe beinhalten. Aus Kostengründen werden oft viele Peripherie-Module nicht redundant implementiert. In diesem Fall wird die Vergleichseinheit 1090 neben Peripherie-Komparatoren zusätzliche Schaltkreise beinhalten, die Daten von nicht-redundanten Peripherie-Modulen synchron zu den redundanten Schaltelementen 1013 und 1063 weiterleiten.

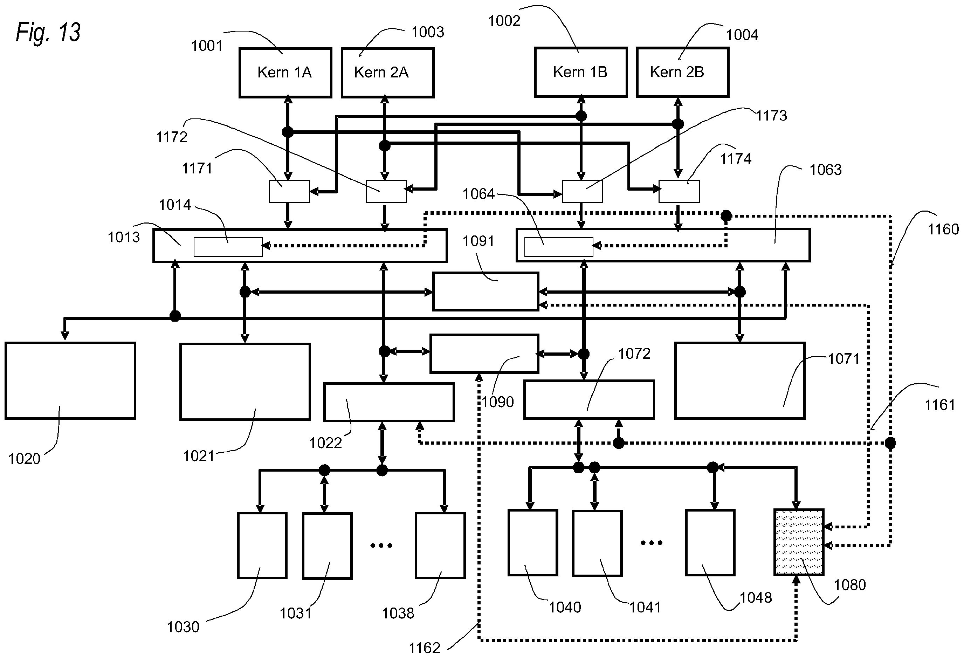

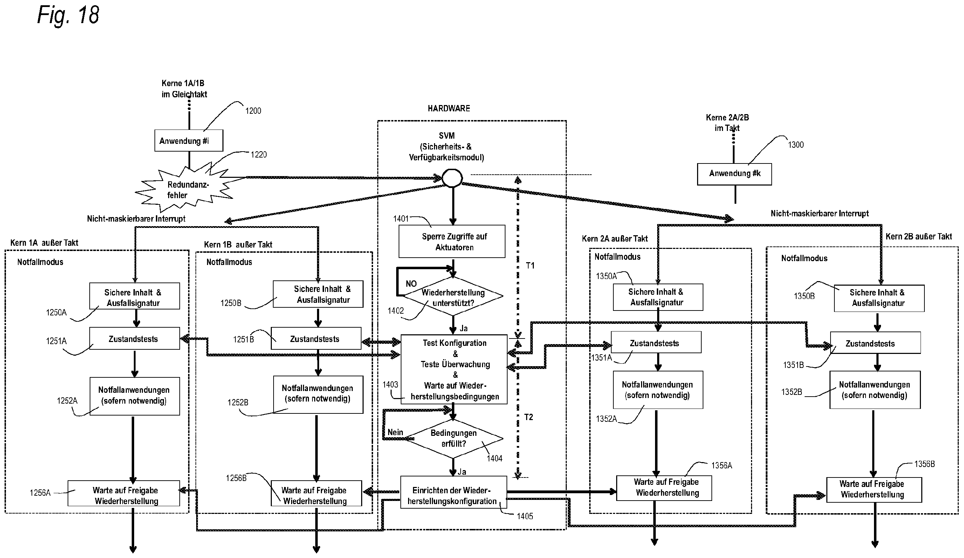

In Figur 13 ist ein weiteres Ausführungsbeispiel des erfindungsgemäßen Kontrollrechnersystems gezeigt. Hierbei wird die in Figur 12 dargestellte Architektur erweitert, um die anhand von Figuren 10 und 11 erläuterten Konzepte zur Gewährleistung einer besseren Verfügbarkeit der vom Kontrollrechnersystem bereitgestellten elektronischen Regelalgorithmen zu unterstützen. Zwischen jedem Prozessorkern 1A, 2A, 1B, 2B und dem entsprechenden Schaltelement 1013, 1063 werden Multiplexer 1171, 1172, 1173 und 1174 positioniert, so dass der jeweils zweite Kern eines Prozessorpaares auf Daten- und Adressbusse vom ersten Kern des Prozessorpaares zugreifen kann, und umgekehrt auch Zugriffe des ersten Prozessors eines Paares auf Daten- und Adressbusse des zweiten Prozessors erfolgen können. Bei Ausfall des Prozessorkerns 1A gewährleistet beispielsweise Multiplexer 1171, dass das Schaltelement 1013 mit den Daten des redundanten Prozessorkerns 1B versorgt wird. Die Steuerung der Multiplexer 1171, 1172, 1173 und 1174 erfolgt im SVM-Modul 1080, in dem alle Fehlersignale 1161, 1162 von den Komparatoren überwacht werden. Nach Erkennung eines Verriegelungsschrittfehlers sperrt das SVM-Modul 1080 Zugriffe auf sicherheitsrelevante Komponenten, indem entsprechende Steuersignale 1160 an Überwachungseinheiten 1014 und 1064 in Schaltelementen 1013 und 1014 sowie an Peripheriebrücken 1022 und 1072 weitergeleitet werden. Die Wiederherstellung des Betriebs nach einer Fehleruntersuchung erfolgt prinzipiell nach den in Figuren 11, 18 und/oder 19 dargestellten Schemata mit gegebenenfalls erforderlichen Anpassungen.

Das SVM-Modul 1080 (Wiederherstellungskontrolleinheit) konfiguriert Schaltelemente 1013, 1063 und Multiplexer 1171, 1172, 1173 und 1174 in geeigneter Weise, um fehlerbehaftete Prozessoren oder auch andere Komponenten vom weiteren Zugriff auf die Peripherie auszuschließen. Dies erfolgt auch mit anderen redundant ausgeführten Komponenten, beispielsweise Speichermodule. Auch hier erfolgt ein Ausschluss des fehlerhaften Speichermoduls durch Umkonfigurierung von Schaltelement 1013, 1063 und Multiplexer 1171, 1172, 1173 und 1174.

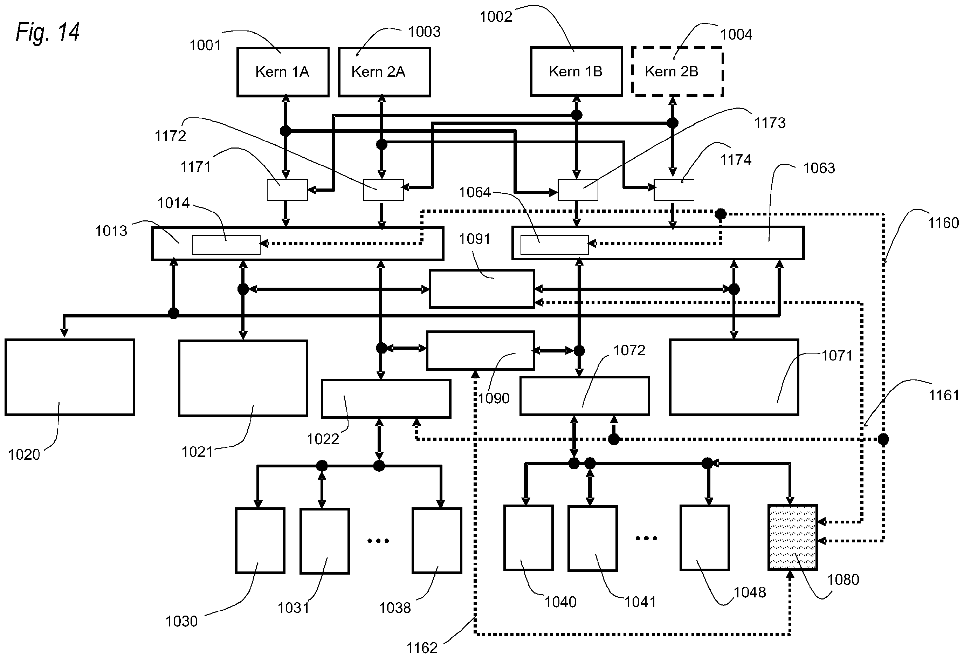

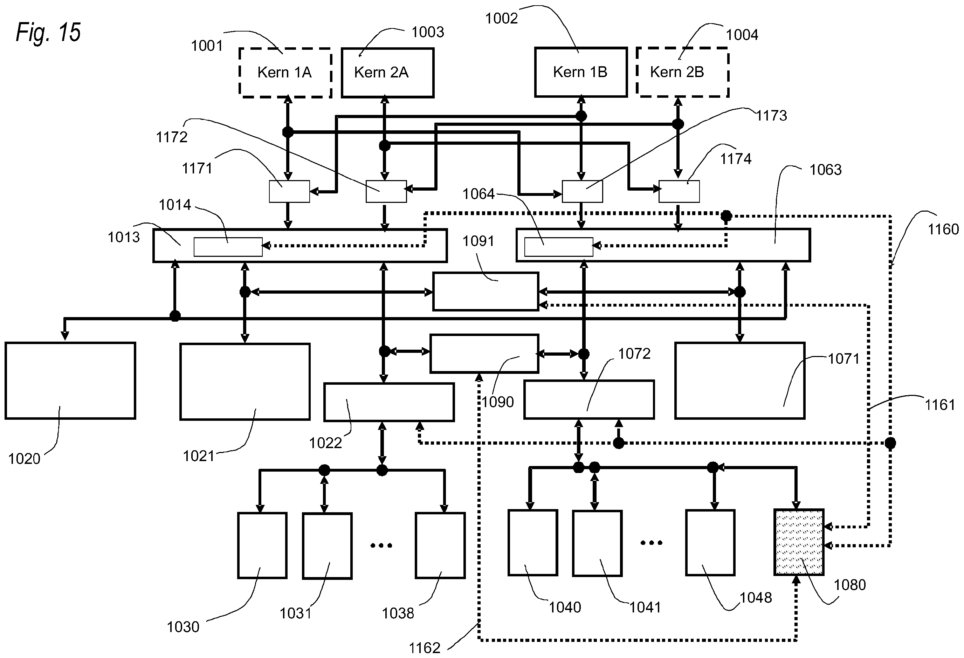

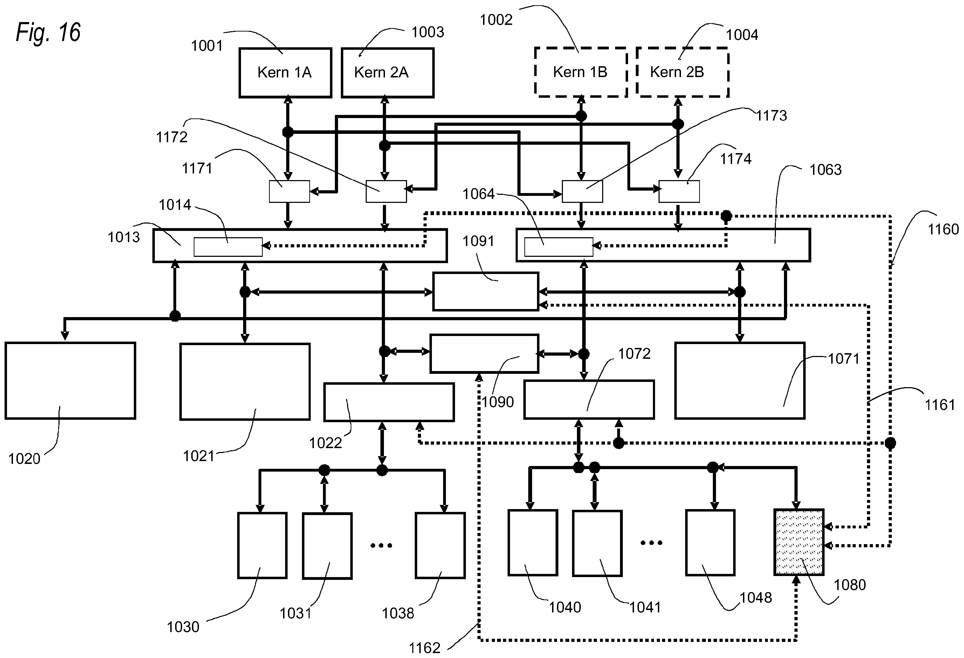

Die Figuren 14, 15 und 16 zeigen jeweils das erfindungsgemäße Kontrollrechnersystem in der Architektur von Figur 13, wobei jeweils ein oder mehrere dauerhaft defekte Prozessoren ausgeschaltet wurden. Der oder die verbleibende/verbleibenden Prozessorkern/Prozessorkerne steuert/steuern jeweils die Peripherie an, wobei gegebenenfalls eine Warnung an den Benutzer erfolgt und sicherheitskritische Funktionen vorzugsweise nur auf Prozessoren durchgeführt werden, die noch einen funktionsfähigen überwachenden Prozessor besitzen, wobei also noch ein vollständiges Prozessorpaar arbeitet. Bevorzugt führen Prozessoren ohne überwachenden Prozessor nur nicht sicherheitskritische Funktionen aus. Die ausgefallenen Prozessoren (Kerne) sind gestrichelt dargestellt.

So zeigt beispielsweise Figur 14 nur den Ausfall des Prozessorkerns 2B. Die Prozessorkerne 1A und 1B sind weiterhin redundant und übernehmen die Ausführung alle sicherkritischen Anwendungen (obligatorische Softwaremodule) einschließlich derjenigen, die ursprünglich vom Prozessorpaar 2A/2B ausgeführt wurden. Prozessorkern 2A kann nicht-sicherheitsrelevante Anwendungen (optionale Softwaremodule) ausführen einschließlich der ursprünglich vom Prozessorpaar 1A/1B ausgeführten optionalen Softwaremodule. Somit wurden alle sicherheitsrelevanten Anwendungen auf das noch verbliebene redundante Prozessorpaar 1A/1B übertragen. Ein Vorteil dieser Herangehensweise ist, dass für den Notfallbetrieb (Ausfall eines Prozessorpaares oder eines einzelnen Kerns eines Prozessorpaares) keine zusätzlichen Reserve-Prozessorpaare bereitgestellt werden müssen, die im Normalbetrieb (alle Prozessoren sind fehlerfrei) keine Funktion ausüben. Lediglich die Ausführung der optionalen Softwaremodule ist bei Auftreten eines Fehlers eingeschränkt. Die ist jedoch nicht sicherheitsrelevant.

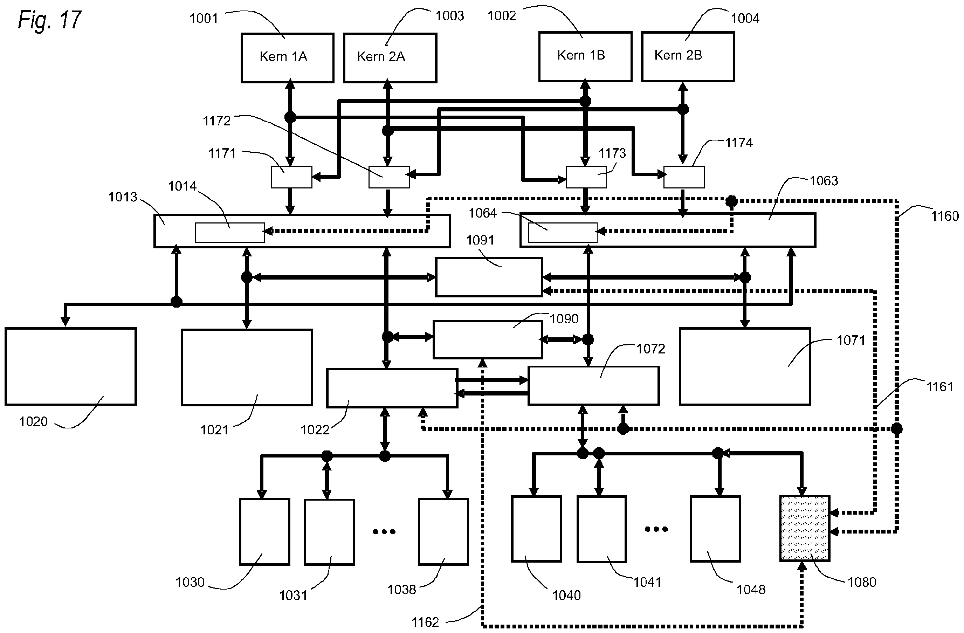

Figur 17 zeigt eine weitere Architektur eines Kontrollrechnersystems mit Prozessorpaaren in einer erweiterten Zweifach-Redundanz gemäß einer Ausführungsform.

Im Gegensatz zur in Figur 9 dargestellten Architektur sind nicht nur Prozessoren 1001, 1002, 1003, 1004 redundant, sondern auch andere Komponenten. Beispielsweise sind die Busmatrizen (Schaltelemente) 1013 und 1063 sowie die Datenspeicher 1021 und 1071 redundant. Die bei dieser Ausführungsform vorliegenden Verbindungen zwischen den Peripheriebrücken 1022 und 1072 sorgen dafür, dass Daten von nicht redundanten Peripherie-Komponenten synchron an die redundanten Paare 1A/1B und/oder 2A/2B von Prozessorkernen übertragen werden.

Die in Figur 17 gezeigte Architektur ist um das SVM-Modul 1080 und die Schaltelemente 1171, 1172, 1173 und 1174 erweitert. Je nach Fehlerarten wird das SVM-Modul 1080 die Überwachungseinheiten 1014 und 1064 innerhalb der Busmatrizen bzw. Schaltelemente 1013 und 1063 sowie die Schaltelemente 1171, 1172, 1173 und 1174 ansteuern, um dem fehlerhaften Prozessorpaar 1A/1B, 2A/2B oder nur dem fehlerhaften Prozessor 1A, 1B, 2A, 2B den Zugriff auf bestimmte Peripherie-Module und RAM Speicher zu verbieten. Das SVM-Modul 1080 wird sofort benachrichtigt, wenn die Komparatoren in den Modulen (Vergleichseinheiten) 1090 und 1091 einen Fehler erkannt haben. Anhand der Fehlersignale wird das SVM-Modul 1080 dafür sorgen, dass das betroffene Prozessorpaar 1A/1B oder 2A/2B oder der betroffene Prozessor 1A, 1B, 2A oder 2B Aktuatoren über Peripherie-Module nicht mehr ansteuern kann. Mittels Steuersignale 1160 kann das SVM-Modul 1080 Zugriffe auf Peripherie-Module in den Busmatrizen 1013 und 1063 oder in den Peripheriebrücken 1022 und 1072 unterbinden.

Figur 18 zeigt die beispielhafte Darstellung des Ablaufs nach einer Fehlererkennung gemäß einer Ausführungsform. Falls der Komparator in den Modulen 1090 und 1091 in Figur 17 einen Fehler 1220 erkennt, wird ein Interrupt für beide Prozessorpaare 1A/1B und 2A/2B ausgelöst.

Die Prozessoren 1A und 1B verlassen den Gleichschrittbetrieb in Stufe 1200 und springen asynchron in die Abarbeitung der Interrupt-Routine. Die Prozessoren 2A und 2B verlassen auch den Gleichschrittbetrieb in Stufe 1300 und springen asynchron in die Abarbeitung der Interrupt-Routine. Jeder Prozessor rettet zuerst Kontext-Daten bzw. Inhalt (1250A, 1250B, 1350A, 1350B), die für die laufende Applikation notwendig sind . Als Zeichen eines guten Zustands werden alle Prozessoren 1A, 1B, 2A und 2B eine vom SVM-Modul 1080 überprüfbare und erkennbare digitale Signatur in Register vom SVM-Modul 1080 schreiben (1250A, 1250B, 1350A, 1350B). Falls die von einem Prozessor abgelegte Signatur falsch oder nach einem vorgegebenen Zeitintervall T1 nicht vorhanden ist, wird der Prozessor nicht mehr im Wiederherstellungsprozess berücksichtigt. In diesem Fall steuert das SVM-Modul 1080 alle Schaltelemente 1014, 1064, 1171, 1172, 1173 und 1174 so, dass jegliche Zugriffe des fehlerhaften Prozessors auf Speichermodule und Peripherie-Module gesperrt sind. Für jede Fehlerart wird ein Fehlermuster im SVM-Modul 1080 abgespeichert. Die restlichen Prozessoren werden weiteren Tests in Stufe 1251A, 1251B, 1351A oder 1351B unterzogen. Je nach Fehlermuster werden unterschiedliche Tests in Software und/oder Hardware durchgeführt. Hardwaretests, beispielsweise in Form von LBIST (Logic Built-in Self Test), werden insbesondere für schwerwiegende Fehler sowie bei unklarer Fehlerzuordnung verwendet. Die Ergebnisse der Tests in Stufe 1251A, 1251B, 1351A und 1351B werden im SVM-Modul 1080 abgespeichert und anschließend nach einem Zeitintervall T2 ausgewertet. Anhand der gesammelten Ergebnisse wird das SVM-Modul 1080 entscheiden, welcher Prozessor oder welche Prozessoren fehlerhaft sind und dementsprechend die Schaltelemente 1014, 1064, 1171, 1172, 1173 und 1174 so konfigurieren, dass nur die fehlerfreien Prozessoren in dem Wiederherstellungsprozess weiter in Betracht gezogen werden. Den fehlerhaften Prozessoren wird der Zugriff verweigert.

Die in Figur 18 veranschaulichte Vorgehensweise lässt sich so erweitern, dass eine fehlerhafte Komponente in anderen redundanten Modulen erkannt wird. Die Grundidee besteht darin, die Zwei-Redundanz überall in einer vorhandenen Architektur auszunutzen, um eine verbesserte Verfügbarkeit eines Sicherheitssystems gewährleisten zu können. Dies trifft beispielsweise für redundante Speicher zu. Mit geeigneten Tests 1251A, 1251B, 1351A und 1351B wird das SVM-Modul 1080 genau ermitteln können, welches von zwei redundanten Speichermodulen fehlerhaft ist. Mittels der Konfiguration der Schaltelemente 1014, 1064, 1171, 1172, 1173 und 1174 können Zugriffe auf die redundanten Speichermodule 1021 oder 1071 so umgeleitet werden, dass nur ein Speicher tatsächlich gültige Daten behält und wiedergibt. Das weitere Vorgehen kann analog zu dem in Figur 11 gezeigten erfolgen.

Die in Figur 17 dargestellte Architektur bietet einen höheren Freiheitsgrad der Fehlertoleranz als die in Figur 12 gezeigte Architektur aufgrund der großen Anzahl von redundanten Komponenten.

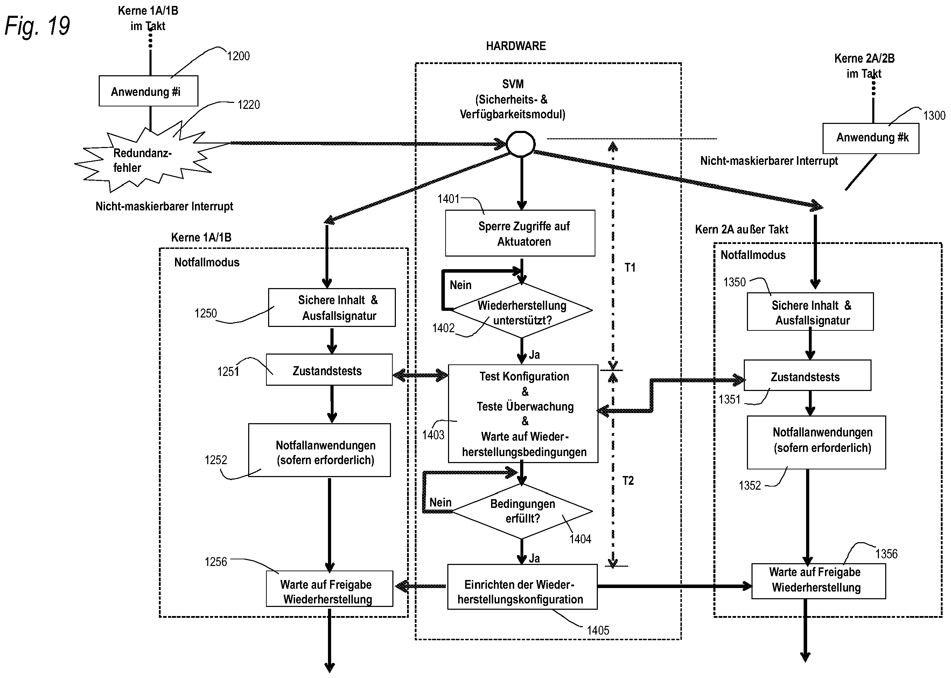

Figur 19 zeigt eine beispielhafte Darstellung des Ablaufs nach Fehlererkennung gemäß einer Ausführungsform. Falls der Komparator im Modul 1011 in Figur 10 einen Fehler 1220 erkennt, wird ein Interrupt für beide Prozessorpaare 1A/1B und 2A/2B ausgelöst. Die Vorgehensweise ist ähnlich wie in Figur 18. Für die in Figur 10 dargestellte Architektur können redundante Prozessor in einem Paar nicht getrennt werden. Daher wird das SVM-Modul 1080 nur feststellen, welches Prozessorpaar fehlerhaft ist. Durch eine entsprechende Konfiguration des Schaltelements 1014 werden alle Datenzugriffe vom fehlerhaften Prozessorpaar gesperrt. Im Übrigen erfolgt die Ausführung analog zu der in Figur 11 gezeigten.

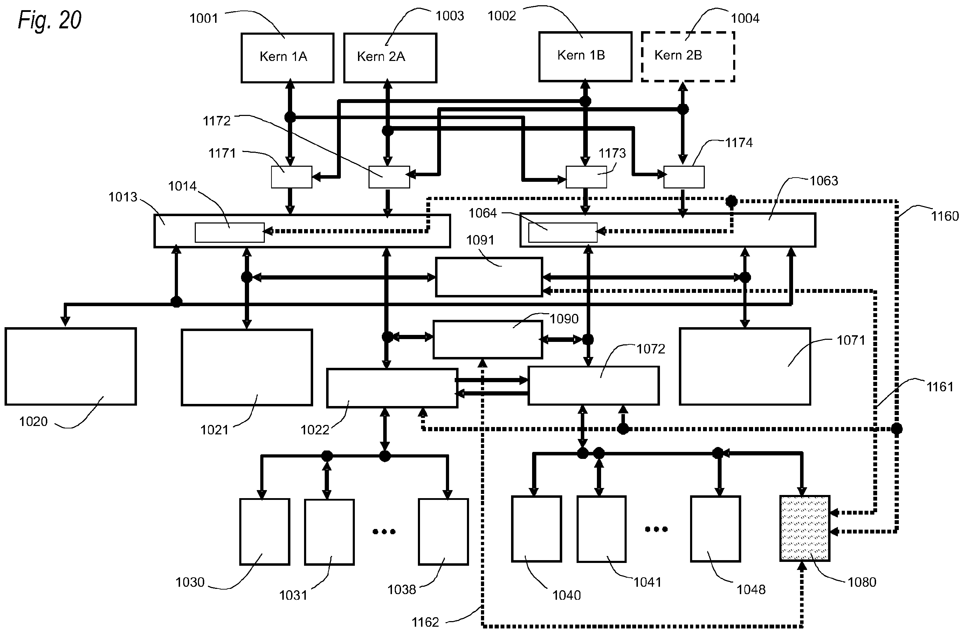

Figur 20 zeigt die Architektur von Figur 17 mit ausgeschaltetem Prozessorkern 2B nach Wiederherstellung.

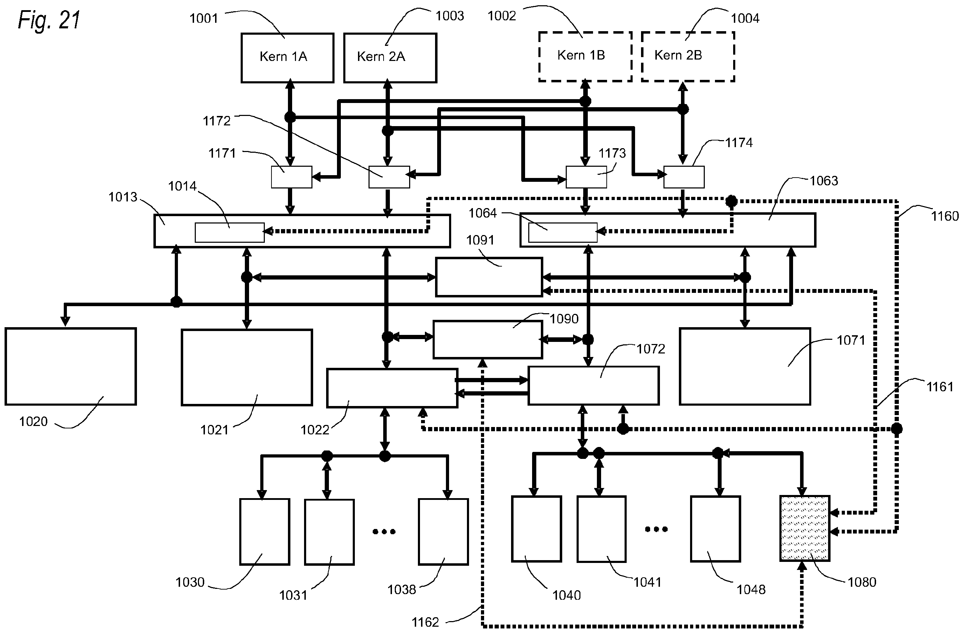

Figur 21 zeigt die Architektur von Figur 17 mit ausgeschalteten Prozessorkernen 1B und 2B nach Wiederherstellung.

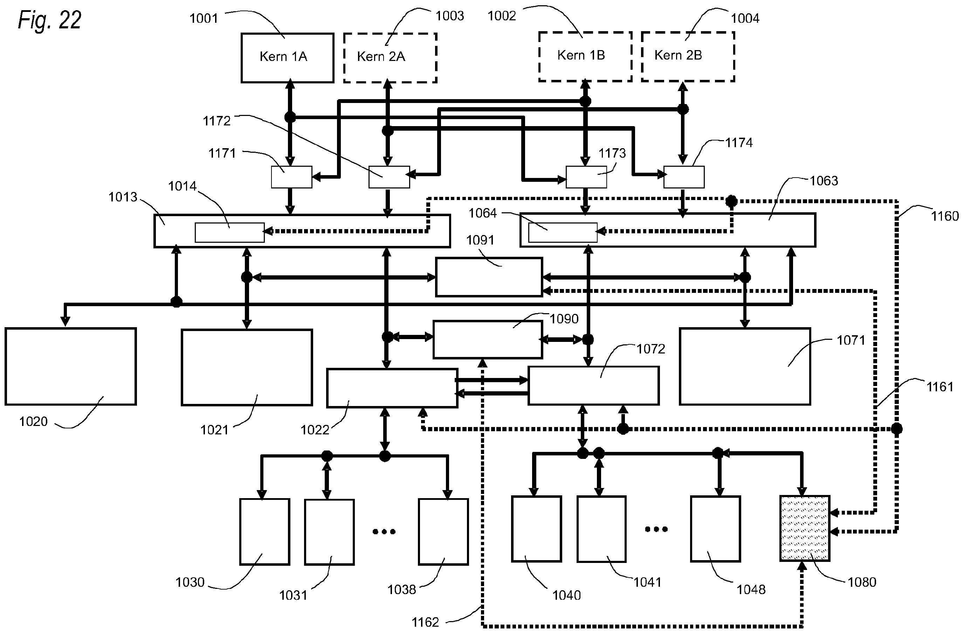

Figur 22 zeigt die Architektur von Figur 17 mit ausgeschalteten Prozessorkernen 1A, 2A und 1B nach Wiederherstellung. Hier liegt keine Prozessorredundanz mehr vor. Jedoch ist durch die oben beschriebene Prüfung, beispielsweise analog zu den in den Figuren 6, 11, 18 und 19 dargelegten Vorgehensweise, sichergestellt, dass alle fehlerhaften Prozessoren richtig erkannt und vom Zugriff auf die Peripherie ausgeschlossen sind.

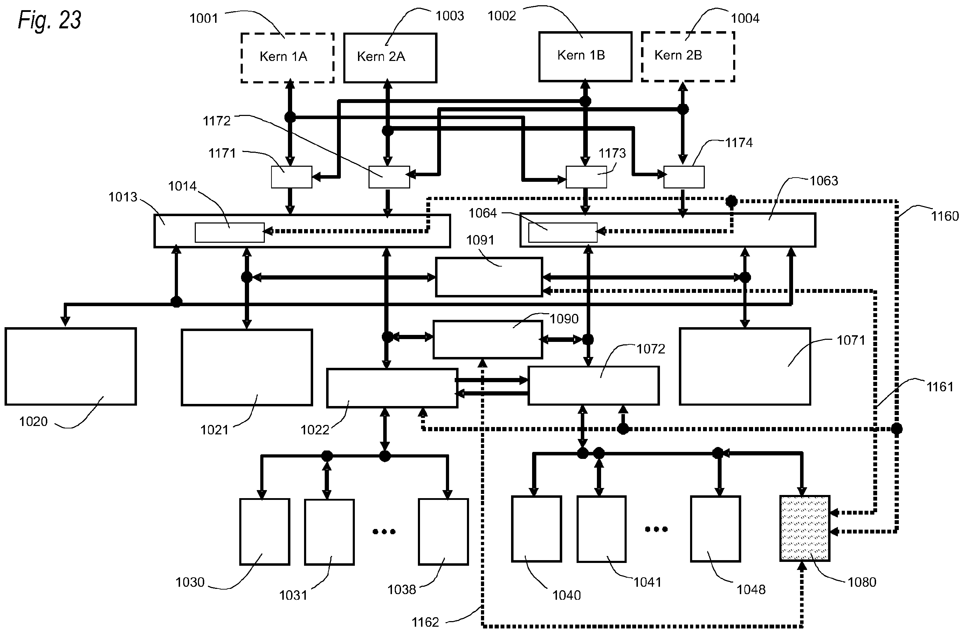

Figur 23 zeigt die Architektur von Figur 17 mit ausgeschalteten Prozessorkernen 1A und 2B nach Wiederherstellung.

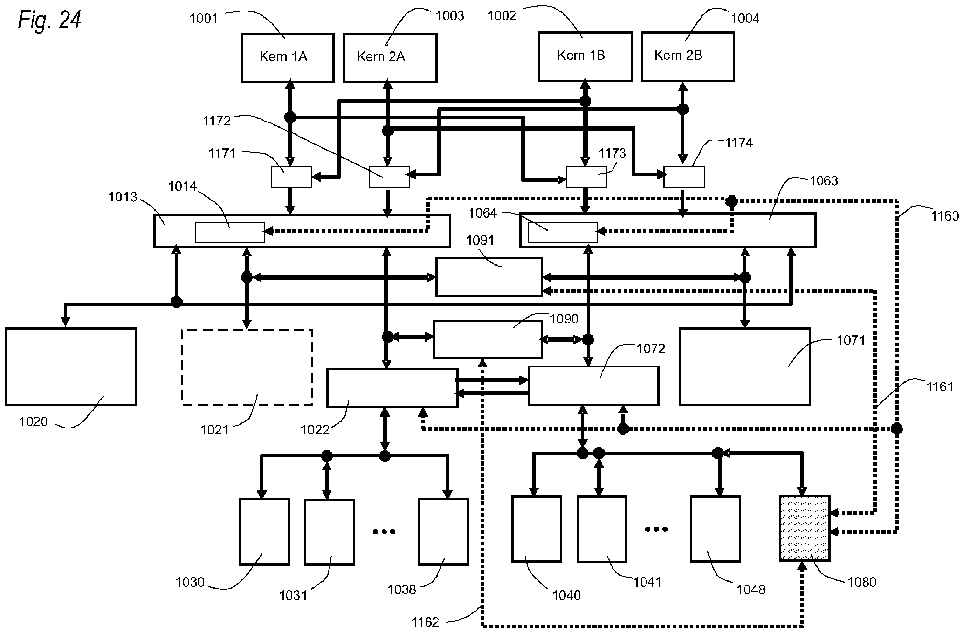

Figur 24 zeigt die Architektur von Figur 17 mit ausgeschaltetem Datenspeicher 21 nach Wiederherstellung. Diese Architektur weist an sich redundante Datenspeicher 21 und 71 auf, wobei nach Ausfall des Speichermoduls 1021 dieses sicher als fehlerhaft identifiziert und ausgeschlossen wurde.

Insgesamt verfügt das hier beschriebene Kontrollrechnersystem über eine verbesserte Bereitstellung von sicherheitsrelevanten Funktionen und das sichere Identifizieren und Ausschließen von fehlerhaften Komponenten.

Die Erfindung ist nicht auf die vorliegend beschriebenen Ausführungsbeispiele beschränkt, sondern kann geeignet erweitert und modifiziert werden.

## Patentansprüche

1. Kontrollrechnersystem, umfassend:
- mindestens zwei Prozessorpaare mit jeweils genau zwei redundant ausgelegten Prozessoren und/oder Prozessorkernen (1, 2, 1001&1002, 1003&1004);
- mindestens zwei Vergleichseinheiten (20, 21, 91, 92, 1011, 1012) zur Überwachung des Synchronisationszustands der redundant ausgelegten Prozessoren jedes Prozessorpaares (1, 2, 1001 &1002, 1003&1004) und zur Erkennung eines Synchronisationsfehlers;
- mindestens eine Peripherieeinheit (95, 96, 1022, 1030, 1031,.., 1038);
- mindestens eine Schaltmatrix (21, 1013, 1063), welche eingerichtet ist, Zugriffe auf die Prozessoren der Prozessorpaare (1,2, 1001 &1002, 1003&1004) oder Zugriffe der Prozessoren der Prozessorpaare (1,2, 1001 &1002, 1003&1004) auf die Peripherieeinheit (95, 96, 1022, 1030, 1031,..., 1038) zu ermöglichen oder zu sperren;
- eine vorzugsweise gemeinsame Fehlerbehandlungseinheit (44, 1080), welche eingerichtet ist, Signale der zwei Vergleichseinheiten (20, 21, 91, 92, 1011,1012) zu empfangen und die mindestens eine Schaltmatrix (1013,1063) anzusteuern, um einen Zugriff eines Prozessors oder Prozessorkerns oder eines Prozessorpaars auf mindestens einen Speicher (1020, 1021, 1071) und/oder die Peripherieeinheiten (95, 96, 1022, 1030, 1031,...,1038) wahlweise komplett oder selektiv zu verhindern; und
- weiterhin derart ausgebildet ist, dass die Prozessorpaare (1,2, 1001 &1002, 1003&1004) im fehlerfreien Betrieb verschiedene Programme zur Bereitstellung von Funktionen ausführen können und bei Auftreten eines Fehlers das fehlerfreie Prozessorpaar (1,2, 1001 &1002, 1003&1004) zumindest einige Funktionen des fehlerbehafteten Prozessorpaars (1,2,1001&1002, 1003&1004) übernimmt, wobei
- das Kontrollrechnersystem mindestens zwei getrennte Schaltmatrizen (1013, 1063) umfasst, wobei die erste Schaltmatrix (1013) mit einer ersten Peripheriebrücke (1022) und mindestens einem ersten Speicher (1021) verbunden ist, während die zweite Schaltmatrix (1063) mit einer zweiten Peripheriebrücke (1072) und mindestens einem zweiten Speicher (1071) verbunden ist und wobei
- das Kontrollrechnersystem ausgebildet ist, um folgende Schritte durchzuführen:
- Übertragen von Daten zwischen der ersten Schaltmatrix (1013) und dem ersten Speicher (1021), zwischen der zweiten Schaltmatrix (1063) und dem zweiten Speicher (1071), zwischen der ersten Schaltmatrix (1013) und der ersten Peripheriebrücke (1022) und zwischen der zweiten Schaltmatrix (1063) und der zweiten Peripheriebrücke (1072),
- Vergleich der übertragenen Daten zwischen der ersten Schaltmatrix (1013) und dem ersten Speicher (1021) mit den übertragenen Daten zwischen der zweiten Schaltmatrix (1063) und dem zweiten Speicher (1071),
- Vergleich der übertragenen Daten zwischen der ersten Schaltmatrix (1013) und der ersten Peripheriebrücke (1022) und den übertragenen Daten zwischen zweiter Schaltmatrix (1063) und zweiter Peripheriebrücke (1072).

2. Kontrollrechnersystem nach Anspruch 1, **dadurch gekennzeichnet, dass** die Fehlerbehandlungseinheit (1080) eingerichtet ist, die Schaltmatrix (1013, 1063) bei Auftreten eines Fehlers so anzusteuern, dass ein Zugriff des mindestens einen fehlerbehafteten Prozessorpaars auf Peripherieeinheiten (1022, 1030, 1031,...,1038), insbesondere Aktuatoren, verhindert wird.

3. Kontrollrechnersystem nach Anspruch 1 oder 2, **dadurch gekennzeichnet, dass** jeder Zugriff auf Peripherieeinheiten (1030, 1031,...,1038) über mindestens eine Peripheriebrücke (1022) erfolgt, die von der Fehlerbehandlungseinheit (1080) gesteuert wird.

4. Kontrollrechnersystem nach einem der Ansprüche 1 bis 3, **dadurch gekennzeichnet, dass** die mindestens zwei Vergleichseinheiten (1011, 1012) direkt mit den Prozessoren der Prozessorpaare (1, 2, 1001, 1002, 1003, 1004) verbunden sind.

5. Kontrollrechnersystem nach einem der vorhergehenden Ansprüche, **dadurch gekennzeichnet, dass** ein erster Prozessor (1001, 1003) eines ersten Prozessorpaars mit der ersten Schaltmatrix (1013) verbunden ist und ein zweiter Prozessor (1002, 1004) des ersten Prozessorpaars mit der zweiten Schaltmatrix (1063) verbunden ist.

6. Kontrollrechnersystem nach einem der vorhergehenden Ansprüche, **dadurch gekennzeichnet, dass** die zwischen erster Schaltmatrix (1013) und erstem Speicher (1021) übertragenen Daten von einer ersten Vergleichseinheit (1091) mit den zwischen zweiter Schaltmatrix (1063) und zweitem Speicher (1071) übertragenen Daten verglichen werden, und dass die zwischen erster Schaltmatrix (1013) und erster Peripheriebrücke (1022) übertragenen Daten von einer zweiten Vergleichseinheit (1090) mit den zwischen zweiter Schaltmatrix (1063) und zweiter Peripheriebrücke (1072) übertragenen Daten verglichen werden.

7. Kontrollrechnersystem nach Anspruch 5 oder 6, **dadurch gekennzeichnet, dass** zwischen den Prozessoren (1001,1002,1003,1004) der Prozessorpaare und Schaltmatrizen (1013,1063) jeweils ein Multiplexer (1171,1172,1173,1174) positioniert ist, wobei die Multiplexer so verschaltet sind, dass der erste Prozessor (1001,1003) eines Prozessorpaars auf die zweite Schaltmatrix (1063) zugreifen kann und der zweite Prozessor (1002,1004) eines Prozessorpaars auf die erste Schaltmatrix (1013) zugreifen kann, sobald die Wiederherstellungseinheit (1080) die Multiplexer (1171,1172,1173,1174) entsprechend steuert.

8. Kontrollrechnersystem nach einem der vorhergehenden Ansprüche, **dadurch gekennzeichnet, dass** die mindestens eine Schaltmatrix (1013,1063) eine Überwachungseinheit (1014,1064) umfasst, welche eingerichtet ist, Zugriffe auf Speicher oder Peripherieeinheiten zu sperren oder die Zugriffe in einem externen oder internen vorzugsweise nichtflüchtigen Speicher zu protokollieren.

9. Kontrollrechnersystem nach einem der Ansprüche 1 bis 8, **dadurch gekennzeichnet, dass** die Fehlerbehandlungseinheit (1080) Signale der mindestens zwei Vergleichseinheiten (1011,1012) ohne zwischengeschaltete Schaltmatrix (1013,1063) direkt empfängt.

10. Kontrollrechnersystem nach einem der Ansprüche 1 bis 9, **dadurch gekennzeichnet, dass** das Kontrollrechnersystem einen ersten und einen zweiten flüchtigen Speicher sowie einen nichtflüchtigen Speicher umfasst, wobei insbesondere ein erstes Prozessorpaar auf den ersten flüchtigen Speicher zugreift und ein zweites Prozessorpaar auf den zweiten flüchtigen Speicher zugreift und beide Prozessorpaare auf den einen nichtflüchtigen Speicher zugreifen.

11. Kontrollrechnersystem nach einem der Ansprüche 1 bis 10, **dadurch gekennzeichnet, dass** ein erster Prozessor (1001,1003) eines Prozessorpaars direkt mit mindestens einer Schaltmatrix (1013) verbunden ist, also lesend und schreibend auf Speicher (1020,1021) und/oder Peripherieeinheiten (1022,1030,1031,...,1038) zugreifen kann, während ein zweiter Prozessor (1002,1004) eines Prozessorpaars nur lesend auf Daten zugreifen kann, wobei insbesondere eine direkt mit beiden Prozessoren eines Prozessorpaars verbundene Vergleichseinheit (1011,1012) Daten an den zweiten Prozessor (1002,1004) des verbundenen Prozessorpaars übermittelt.

12. Kontrollrechnersystem nach einem der Ansprüche 1 bis 11, **dadurch gekennzeichnet, dass** die Fehlerbehandlungseinheit (1080) eine Wiederherstellungskontrolleinheit (44) ist, die eingerichtet ist, die Ausführung wenigstens eines Testprogramms durch die zwei oder mehreren Prozessorpaare (1, 2, 1001 &1002, 1003&1004) nach Auftreten eines Synchronisationsfehlers zu überwachen und die Testergebnisse zu bewerten, und weiterhin eingerichtet ist, wenigstens einen ersten Multiplexer (70, 91) oder die Schaltmatrix (1013, 1063) zu konfigurieren.

13. Kontrollrechnersystem nach Anspruch 12, **dadurch gekennzeichnet, dass** die Wiederherstellungskontrolleinheit (44) eingerichtet ist, den Synchronisationsfehler einem Fehlertyp zuzuordnen und auf Basis des Fehlertyps ein Testprogramm auszuwählen.

14. Kontrollrechnersystem nach Anspruch 12 oder 13, **dadurch gekennzeichnet, dass** die Wiederherstellungskontrolleinheit (44) eingerichtet ist, den ersten Multiplexer (70, 91) auf Basis des Testergebnisses zu konfigurieren.

15. Kontrollrechnersystem nach einem der Ansprüche 1 bis 14, **dadurch gekennzeichnet, dass** eine erste periphere Einheit (72) eine gemeinsame Einheit ist, die wahlweise von einem der beiden Prozessorpaaren (1, 2, 1001 &1002, 1003&1004) angesteuert werden kann, und das Kontrollrechnersystem wenigstens zwei weitere periphere Einheiten (61, 63) umfasst, wobei die eine der beiden peripheren Einheiten (61, 63) nur dem ersten Prozessorpaar (1, 1001&1002) und die andere der beiden peripheren Einheiten (61, 63) nur dem zweiten Prozessorpaar (2, 1003&1004) als private periphere Einheit zugeordnet ist, auf die nur das jeweils zugeordnete Prozessorpaar (1, 2, 1001 &1002, 1003&1004) zugreifen kann. [0020]

16. Kontrollrechnersystem nach Anspruch 15, **dadurch gekennzeichnet, dass** die zwei weiteren peripheren Einheiten (61, 63) redundante Einheiten sind.

17. Verfahren zur Steuerung eines Kontrollrechnersystems, welches mindestens zwei Prozessorpaare (1001&1002, 1003&1004) mit jeweils genau zwei redundant ausgelegten Prozessoren und/oder Prozessorkernen (1, 2, 1001&1002, 1003&1004), mindestens zwei Vergleichseinheiten (1011,1012) zur Überwachung des Synchronisationszustands der redundant ausgelegten Prozessoren jedes Prozessorpaares (1, 2, 1001 &1002, 1003&1004) und zur Erkennung eines Synchronisationsfehlers, mindestens eine Peripherieeinheit (95, 96, 1022, 1030, 1031,...,1038), mindestens eine Schaltmatrix (1013, 1063), welche Zugriffe eines Prozessors oder eines Prozessorpaars auf Speicher und/oder mindestens ein Peripherieeinheit ermöglicht oder sperrt, und mindestens eine Fehlerbehandlungseinheit (1080), welche eingerichtet ist, Signale der zwei Vergleichseinheiten (20, 21, 91, 92, 1011,1012) zu empfangen und die mindestens eine Schaltmatrix (1013,1063) anzusteuern, um einen Zugriff eines Prozessors oder Prozessorkerns oder eines Prozessorpaars auf mindestens einen Speicher (1020, 1021, 1071) und/oder die Peripherieeinheiten (95, 96, 1022, 1030, 1031,...,1038) wahlweise komplett oder selektiv zu verhindern, umfasst, wobei die Prozessorpaare (1, 2, 1001 &1002, 1003&1004) im fehlerfreien Betrieb verschiedene Programme zur Bereitstellung von Funktionen ausführen können und bei Auftreten eines Fehlers das fehlerfreie Prozessorpaar (1, 2, 1001&1002, 1003&1004) zumindest einige Funktionen des fehlerbehafteten Prozessorpaars (1, 2, 1001 &1002, 1003&1004) übernimmt und das Kontrollrechnersystem mindestens zwei getrennte Schaltmatrizen (1013, 1063) umfasst, wobei die erste Schaltmatrix (1013) mit einer ersten Peripheriebrücke (1022) und mindestens einem ersten Speicher (1021) verbunden ist, während die zweite Schaltmatrix (1063) mit einer zweiten Peripheriebrücke (1072) und mindestens einem zweiten Speicher (1071) verbunden ist und folgende Schritte durchgeführt werden:
- Übertragen von Daten zwischen der ersten Schaltmatrix (1013) und dem ersten Speicher (1021), zwischen der zweiten Schaltmatrix (1063) und dem zweiten Speicher (1071), zwischen der ersten Schaltmatrix (1013) und der ersten Peripheriebrücke (1022) und zwischen der zweiten Schaltmatrix (1063) und der zweiten Peripheriebrücke (1072),
- Vergleich der übertragenen Daten zwischen der ersten Schaltmatrix (1013) und dem ersten Speicher (1021) mit den übertragenen Daten zwischen der zweiten Schaltmatrix (1063) und dem zweiten Speicher (1071),
- Vergleich der übertragenen Daten zwischen der ersten Schaltmatrix (1013) und der ersten Peripheriebrücke (1022) und den übertragenen Daten zwischen zweiter Schaltmatrix (1063) und zweiter Peripheriebrücke (1072).

18. Verfahren nach Anspruch 17, **dadurch gekennzeichnet, dass** für die Sicherheit der vom Kontrollrechnersystem angesteuerten Vorrichtung kritische Funktionen unabhängig vom Auftreten eines Fehlers ausgeführt werden.

19. Verfahren nach Anspruch 17 oder 18, **dadurch gekennzeichnet, dass** bei Auftreten eines Fehlers nicht sicherheitskritische Funktionen zumindest teilweise nicht mehr bereitgestellt werden.

20. Verfahren nach einem der Ansprüche 17 bis 19, **dadurch gekennzeichnet, dass** bei Auftreten eines Fehlers Zugriffe des fehlerbehafteten Prozessors oder Prozessorpaars auf die Peripherieeinheit gesperrt werden.

21. Verfahren nach einem der Ansprüche 17 bis 20, **dadurch gekennzeichnet, dass** nach Auftreten eines Fehlers das fehlerbehaftete Prozessorpaar ein Diagnoseprogramm ausführt.

22. Verfahren nach Anspruch 21, **dadurch gekennzeichnet, dass** aufgetretene Fehler klassifiziert werden, wobei zumindest zwischen transienten und permanenten Fehlern unterschieden wird.

23. Verfahren nach Anspruch 22, **dadurch gekennzeichnet, dass** nach Auftreten eines permanenten Fehlers das fehlerbehaftete Prozessorpaar dauerhaft deaktiviert wird.

24. Verfahren nach Anspruch 22 oder 23, **dadurch gekennzeichnet, dass** beide Prozessorpaare erneut verschiedene Programme ausführen können, wenn das fehlerbehaftete Prozessorpaar das Diagnoseprogramm ohne Erkennung eines dauerhaften Fehlers durchlaufen hat.

25. Verfahren nach einem der Ansprüche 17 bis 24, **dadurch gekennzeichnet, dass** die Fehlerbehandlungseinheit das Auftreten von Fehlern in einem nichtflüchtigen Speicher protokolliert.

26. Verfahren nach Anspruch 25, **dadurch gekennzeichnet, dass** ein Prozessorpaar dauerhaft deaktiviert wird, wenn Anzahl und/oder Häufigkeit der aufgetretenen Fehler einen vorgegebenen Schwellwert überschreitet.

27. Verwendung eines Kontrollrechnersystems nach einem der vorhergehenden Ansprüche in einem Kraftfahrzeug, insbesondere um ein Bremssystem zu steuern oder zu regeln.

28. Verfahren nach einem der Ansprüche 17 bis 26, **dadurch gekennzeichnet, dass**
- Synchrones Ausführen wenigstens eines ersten sicherheitsrelevanten Softwareprogramms auf einem Prozessorpaar und synchrones Ausführen wenigstens eines zweiten sicherheitsrelevanten Softwareprogramm auf dem anderen Prozessorpaar zur Ansteuerung der einen oder mehreren Peripherieeinheiten und/oder des Speichers;
- Überwachung der Synchronisation der Prozessoren (1001 &1002, 1003&1004) jedes Prozessorpaares durch die Vergleichseinheit (1011,1012) und Ausgabe eines Synchronisationsfehlersignals durch die Vergleichseinheit (1011,1012), wenn die beiden Prozessoren (1001&1002, 1003&1004) eines Prozessorpaars desynchronisiert sind; und
- sofern ein Synchronisationsfehlersignal ausgegeben wurde:
- Unterbrechen der Abarbeitung des ersten sicherheitsrelevanten Softwareprogramms und des zweiten sicherheitsrelevanten Softwareprogramms durch die Prozessorpaare,
- Durchführen eines Tests zur Überprüfung, ob eines der beiden Prozessorpaare fehlerhaft ist, und
- wenn eines der beiden Prozessorpaare fehlerbehaftet ist, Ausführen des ersten sicherheitsrelevanten Softwareprogramms und des zweiten sicherheitsrelevanten Softwareprogramm auf dem fehlerfreien Prozessorpaar und Ansteuern der Schaltmatrix (1013, 1063) durch die Fehlerbehandlungseinheit (1080) zum Sperren des Zugriffs des fehlerbehaftete Prozessorpaars oder eines Prozessors, wenn nur ein Prozessor dieses Prozessorpaars fehlerbehaftet ist, auf Speicher und/oder einer oder mehreren Peripherieeinheiten.

29. Verfahren nach Anspruch 28, **dadurch gekennzeichnet, dass** der Test die gleichzeitige Ausführung wenigstens eines Testprogramms durch beide Prozessorpaare umfasst, wobei ein Prozessor der Prozessorpaare als fehlerhaft angesehen wird, wenn wenigstens eine der folgenden Bedingungen erfüllt ist:
- der Prozessor hat das Testprogramm nicht innerhalb einer ersten Zeitdauer T1 abgearbeitet,
- der Prozessor hat das Testprogramm nicht erfolgreich abgearbeitet,
- der Prozessor ist nach Ablauf der ersten Zeitdauer T1 für eine zweite Zeitdauer T2 nicht in den Ruhezustand übergegangen.

30. Verfahren nach Anspruch 28 oder 29, **dadurch gekennzeichnet, dass** der Synchronisationsfehler bewertet und einem Fehlertyp zugeordnet wird, wobei zur Überprüfung der Prozessoren wenigstens ein Testprogramm in Abhängigkeit vom Fehlertyp ausgewählt wird.

## Claims

1. Control computer system comprising:
- at least two processor pairs with in each case exactly two redundantly designed processors and/or processor cores (1, 2, 1001&1002, 1003&1004);
- at least two comparison units (20, 21, 91, 92, 1011, 1012) for monitoring the synchronization state of the redundantly designed processors in each processor pair (1, 2, 1001&1002, 1003&1004) and for detecting a synchronization error;
- at least one peripheral unit (95, 96, 1022, 1030, 1031, ..., 1038);
- at least one switching matrix (21, 1013, 1063) which is set up to allow or block access to the processors in the processor pairs (1, 2, 1001&1002, 1003&1004) or access to the peripheral unit (95, 96, 1022, 1030, 1031, ..., 1038) by the processors in the processor pairs (1, 2, 1001&1002, 1003&1004)
- a preferably common error-handling unit (44, 1080) which is set up to receive signals from the two comparison units (20, 21, 91, 92, 1011, 1012) and to drive the at least one switching matrix (1013, 1063) in order to optionaly completely or selectively prevent access to at least one memory (1020, 1021, 1071) and/or the peripheral units (95, 96, 1022, 1030, 1031, ..., 1038) by a processor or processor core or a processor pair; and
- is furthermore embodied in such a way that the processor pairs (1, 2, 1001&1002, 1003&1004) can execute different programs in order to provide functions in the error-free mode and, if an error occurs, the error-free processor pair (1, 2, 1001&1002, 1003&1004) assumes at least some functions of the defective processor pair (1, 2, 1001&1002, 1003&1004), wherein
- the control computer system comprises at least two separate switching matrices (1013, 1063), wherein the first switching matrix (1013) is connected to a first peripheral bridge (1022) and at least one first memory (1021), while the second switching matrix (1063) is connected to a second peripheral bridge (1072) and at least one second memory (1071) and wherein
- the control computer system is designed to carry out the following steps:
- transmission of data between the first switching matrix (1013) and the first memory (1021), between the second switching matrix (1063) and the second memory (1071), between the first switching matrix (1013) and the first peripheral bridge (1022), and between the second switching matrix (1063) and the second peripheral bridge (1072),
- comparison of the data transmitted between the first switching matrix (1013) and the first memory (1021) with the data transmitted between the second switching matrix (1063) and the second memory (1071),
- comparison of the data transmitted between the first switching matrix (1013) and the first peripheral bridge (1022) with the data transmitted between the second switching matrix (1063) and the second peripheral bridge (1072).

2. Control computer system according to Claim 1, **characterized in that**, an error occurs, the error-handling unit (1080) is set up to drive the switching matrix (1013, 1063) in such a manner that access to peripheral units (1022, 1030, 1031, ..., 1038), in particular actuators, by the at least one defective processor pair is preventend.

3. Control computer system according to Claim 1 or 2, **characterized in that** peripheral units (1030, 1031, ..., 1038) are accessed each time via at least one peripheral bridge (1022) which is controlled by the error-handling unit (1080).

4. Control computer system according to one of Claims 1 to 3, **characterized in that** the at least two comparison units (1011, 1012) are directly connected to the processors in the processor pairs (1, 2, 1001, 1002, 1003, 1004).

5. Control computer system according to one of the preceding claims, characaterized in that a first processor (1001, 1003) in a first processor pair is connected to the first switching matrix (1013), and a second processor (1002, 1004) in the first processor pair is connected to the second switching matrix (1063).

6. Control computer system according to one of the preceding claims, **characterized in that** the data transmitted between the first switching matrix (1013) and the first memory (1021) are compared with the data transmitted between the second switching matrix (1063) and the second memory (1071) by a first comparison unit (1091), and **in that** the data transmitted between the first switching matrix (1013) and the first peripheral bridge (1022) are compared with the data transmitted between the second switching matrix (1063) and the second peripheral bridge (1072) by a second comparison unit (1090).

7. Control computer system according to Claim 5 or 6, **characterized in that** a multiplexer (1171, 1172, 1173, 1174) is respectively positioned between the processors (1001, 1002, 1003, 1004) in the processor pairs and the switching matrices (1013, 1063), wherein the multiplexers are connected in such a manner that the first processor (1001, 1003) in a processor pair can access the second switching matrix (1063) and the second processor (1002, 1004) in a processor pair can access the first switching matrix (1013) as soon as the restoration unit (1080) accordingly controls the multiplexers (1171, 1172, 1173, 1174).

8. Control computer system according to one of the preceding claims, **characterized in that** the at least one switching matrix (1013, 1063) comprises a monitoring unit (1014, 1064) which is set up to block access to memories or peripheral units or to log the access in an external or internal, preferably non-volatile, memory.

9. Control computer system according to one of Claims 1 to 8, **characterized in that** the error-handling unit (1080) directly receives signals from the at least two comparison units (1011, 1012) without an interposed switching matrix (1013, 1063).

10. Control computer system according to one of Claims 1 to 9, **characterized in that** the control computer system comprises a first and a second volatile memory and a non-volatile memory, wherein, in particular, a first processor pair accesses the first volatile memory and a second processor pair accesses the second volatile memory and both processor pairs access the one non-volatile memory.

11. Control computer system according to one of Claims 1 to 10, **characterized in that** a first processor (1001, 1003) in a processor pair is directly connected to at least one switching matrix (1013), that is to say can have read and write access to memories (1020, 1021) and/or peripheral units (1022, 1030, 1031, ..., 1038), while a second processor (1002, 1004) in a processor pair can have only read access to data, wherein, in particular, a comparison unit (1011, 1012) directly connected to both processors in a processor pair transmits data to the second processor (1002, 1004) in the connected processor pair.

12. Control computer system according to one of Claims 1 to 11, **characterized in that** the error-handling unit (1080) is a restoration control unit (44) which is set up to monitor the execution of at least one test program by the two or more processor pairs (1, 2, 1001&1002, 1003&1004) after a synchronization error has occurred and to assess the test results and is also set up to configure at least one first multiplexer (70, 91) or the switching matrix (1013, 1063).

13. Control computer system according to Claim 12, **characterized in that** the restoration control unit (44) is set up to assign the synchronization error to an error type and to select a test program on the basis of the error type.

14. Control computer system according to Claim 12 or 13, **characterized in that** the restoration control unit (44) is set up to configure the first multiplexer (70, 91) on the basis of the test result.

15. Control computer system according to one of Claims 1 to 14, **characterized in that** a first peripheral unit (72) is a common unit which can be optionally driven by one of the two processor pairs (1, 2, 1001&1002, 1003&1004), and the control computer system comprises at least two further peripheral units (61, 63), wherein one of the two peripheral units (61, 63) is assigned only to the first processor pair (1, 1001&1002) and the other of the two peripheral units (61, 63) is assigned only to the second processor pair (2, 1003&1004) as a private peripheral unit which can be accessed only by the respectively assigned processor pair (1, 2, 1001&1002, 1003&1004).

16. Control computer system according to Claim 15, **characterized in that** the two further peripheral units (61, 63) are redundant units.

17. Method for controlling a control computer system comprising at least two processor pairs (1001&1002, 1003&1004) with in each case exactly two redundantly designed processors and/or processor cores (1, 2, 1001&1002, 1003&1004), at least two comparison units (1011, 1012) for monitoring the synchronization state of the redundantly designed processors in each processor pair (1, 2, 1001&1002, 1003&1004) and for detecting a synchronization error, at least one peripheral unit (95, 96, 1022, 1030, 1031, ..., 1038), at least one switching matrix (1013, 1063) which allows or blocks access to memories and/or at least one peripheral unit by a processor or a processor pair, and at least one error-handling unit (1080) which is set up to receive signals from the two comparison units (20, 21, 91, 92, 1011, 1012) and to drive the at least one switching matrix (1013, 1063) in order to optionally completely or selectively prevent access to at least one memory (1020, 1021, 1071) and/or the peripheral units (95, 96, 1022, 1030, 1031, ..., 1038) by a processor or processor core or a processor pair, wherein the processor pairs (1, 2, 1001&1002, 1003&1004) can execute different programs in order to provide functions in the error-free mode and, if an error occurs, the error-free processor pair (1, 2, 1001&1002, 1003&1004) assumes at least some functions of the defective processor pair (1, 2, 1001&1002, 1003&1004) and the control computer system comprises at least two separate switching matrices (1013, 1063), wherein the first switching matrix (1013) is connected to a first peripheral bridge (1022) and at least one first memory (1021), while the second switching matrix (1063) is connected to a second peripheral bridge (1072) and at least one second memory (1071) and the following steps are carried out:
- transmission of data between the first switching matrix (1013) and the first memory (1021), between the second switching matrix (1063) and the second memory (1071), between the first switching matrix (1013) and the first peripheral bridge (1022), and between the second switching matrix (1063) and the second peripheral bridge (1072),
- comparison of the data transmitted between the first switching matrix (1013) and the first memory (1021) with the data transmitted between the second switching matrix (1063) and the second memory (1071),
- comparison of the data transmitted between the first switching matrix (1013) and the first peripheral bridge (1022) with the data transmitted between the second switching matrix (1063) and the second peripheral bridge (1072).

18. Method according to Claim 17, **characterized in that** functions critical to the safety of the apparatus driven by the control computer system are executed independently of the occurrence of an error.

19. Method according to Claim 17 or 18, **characterized in that** non-safety-critical functions are at least partially no longer provided when an error occurs.

20. Method according to one of Claims 17 to 19, **characterized in that** access to the peripheral unit by the defective processor or processor pair is blocked when an error occurs.

21. Method according to one of Claims 17 to 20, **characterized in that** the defective processor pair executes a diagnostic program after an error has occurred.

22. Method according to Claim 21, **characterized in that** errors which have occurred are classified, wherein a distinction is made at least between transient errors and permanent errors.

23. Method according to Claim 22, **characterized in that** the defective processor pair is permanently deactivated after a permanent error has occurred.

24. Method according to Claim 22 or 23, **characterized in that** both processor pairs can execute different programs again when the defective processor pair has run through the diagnostic program without a permanent error being detected.

25. Method according to one of Claims 17 to 24, **characterized in that** the error-handling unit logs the occurrence of errors in a non-volatile memory.

26. Method according to Claim 25, **characterized in that** a processor pair is permanently deactivated if the number and/or frequency of errors which have occurred exceed(s) a predefined threshold value.

27. Use of a control computer system according to one of the preceding claims in a motor vehicle, in particular in order to control or regulate a brake system.

28. Method according to one of Claims 17 to 26, **characterized in that**
- synchronously executing at least one first safety-relevant software program on a processor pair and synchronously executing at least one second safety-relevant software program on the other processor pair in order to drive the one or more peripheral units and/or the memory;
- monitoring the synchronization of the processors (1001&1002, 1003&1004) in each processor pair by means of the comparison unit (1011, 1012) and outputting a synchronization error signal by means of the comparison unit (1011, 1012) when the two processors (1001&1002, 1003&1004) in a processor pair are desynchronized; and
- if a synchronization error signal has been output:
- interrupting the execution of the first safety-relevant software program and the second safety-relevant software program by the processor pairs,
- carrying out a test in order to check whether one of the two processor pairs is defective, and
- if one of the two processor pairs is defective, executing the first safety-relevant software program and the second safety-relevant software program on the error-free processor pair and driving the switching matrix (1013, 1063) by means of the error-handling unit (1080) in order to block access to memories and/or one or more peripheral units by the defective processor pair or a processor if only one processor in this processor pair is defective.

29. Method according to Claim 28, **characterized in that** the test comprises the simultaneous execution of at least one test program by both processor pairs, wherein a processor in the processor pairs is considered to be defective when at least one of the following conditions is met:
- the processor has not executed the test program within a first period of time T1,
- the processor has not successfully executed the test program,
- the processor has not changed to the quiescent state for a second period of time T2 after the first period of time T1 has elapsed.

30. Method according to Claim 28 or 29, **characterized in that** the synchronization error is assessed and is assigned to an error type, wherein at least one test program is selected on the basis of the error type in order to check the processors.

## Revendications

1. Système informatique de contrôle, comprenant :
- au moins deux paires de processeurs ayant chacune exactement deux processeurs et/ou cœurs de processeur (1, 2, 1001&1002, 1003&1004) de conception redondante ;
- au moins deux unités de comparaison (20, 21, 91, 92, 1011, 1012) destinées à surveiller l'état de synchronisation des processeurs de conception redondante de chaque paire de processeurs (1, 2, 1001&1002, 1003&1004) et à reconnaître une erreur de synchronisation ;
- au moins une unité périphérique (95, 96, 1022, 1030, 1031, ..., 1038) ;
- au moins une matrice de commutation (21, 1013, 1063) qui est conçue pour rendre possible ou pour bloquer des accès aux processeurs des paires de processeurs (1, 2, 1001&1002, 1003&1004) ou des accès des processeurs des paires de processeurs (1, 2, 1001&1002, 1003&1004) à l'unité périphérique (95, 96, 1022, 1030, 1031, ..., 1038) ;
- une unité de traitement d'erreur (44, 1080) de préférence commune, qui est conçue pour recevoir des signaux des deux unités de comparaison (20, 21, 91, 92, 1011, 1012) et piloter l'au moins une matrice de commutation (1013, 1063) en vue d'empêcher, au choix, entièrement ou de manière sélective un accès d'un processeur ou d'un cœur de processeur ou d'une paire de processeurs à au moins une mémoire (1020, 1021, 1071) et/ou aux unités périphériques (95, 96, 1022, 1030, 1031, ..., 1038) ; et
- qui est en outre configurée de telle sorte que les paires de processeurs (1, 2, 1001&1002, 1003&1004), dans un fonctionnement sans erreur, peuvent exécuter différents programmes en vue de mettre à disposition des fonctions et, en cas de survenance d'une erreur, la paire de processeurs (1, 2, 1001&1002, 1003&1004) exempte d'erreur prend en charge au moins certaines fonctions de la paire de processeurs (1, 2, 1001&1002, 1003&1004) affectée par une erreur,
- le système informatique de contrôle comportant au moins deux matrices de commutation (1013, 1063) séparées, la première matrice de commutation (1013) étant reliée à une première passerelle périphérique (1022) et au moins une première mémoire (1021), alors que la deuxième matrice de commutation (1063) est reliée à une deuxième passerelle périphérique (1072) et au moins une deuxième mémoire (1071) et
- le système informatique de contrôle étant configuré pour exécuter les étapes suivantes :
- transmission de données entre la première matrice de commutation (1013) et la première mémoire (1021), entre la deuxième matrice de commutation (1063) et la deuxième mémoire (1071), entre la première matrice de commutation (1013) et la première passerelle périphérique (1022) et entre la deuxième matrice de commutation (1063) et la deuxième passerelle périphérique (1072),
- comparaison des données transmises entre la première matrice de commutation (1013) et la première mémoire (1021) avec les données transmises entre la deuxième matrice de commutation (1063) et la deuxième mémoire (1071),
- comparaison des données transmises entre la première matrice de commutation (1013) et la première passerelle périphérique (1022) et avec les données transmises entre la deuxième matrice de commutation (1063) et la deuxième passerelle périphérique (1072).

2. Système informatique de contrôle selon la revendication 1, **caractérisé en ce que** l'unité de traitement d'erreur (1080) est conçue pour, en cas de survenance d'une erreur, piloter la matrice de commutation (1013, 1063) de telle sorte qu'un accès de l'au moins une paire de processeurs affectée par l'erreur aux unités périphériques (1022, 1030, 1031, ..., 1038), notamment à des actionneurs, est empêché.

3. Système informatique de contrôle selon la revendication 1 ou 2, **caractérisé en ce que** chaque accès aux unités périphériques (1030, 1031, ..., 1038) s'effectue par le biais d'au moins une passerelle périphérique (1022) qui est commandée par l'unité de traitement d'erreur (1080).

4. Système informatique de contrôle selon l'une des revendications 1 à 3, **caractérisé en ce que** les au moins deux unités de comparaison (1011, 1012) sont directement reliées aux processeurs des paires de processeurs (1, 2, 1001, 1002, 1003, 1004).

5. Système informatique de contrôle selon l'une des revendications précédentes, **caractérisé en ce qu'**un premier processeur (1001, 1003) d'une première paire de processeurs est relié à la première matrice de commutation (1013) et un deuxième processeur (1002, 1004) de la première paire de processeurs est relié à la deuxième matrice de commutation (1063).

6. Système informatique de contrôle selon l'une des revendications précédentes, **caractérisé en ce que** les données transmises entre la première matrice de commutation (1013) et la première mémoire (1021) sont comparées par une première unité de comparaison (1091) avec les données transmises entre la deuxième matrice de commutation (1063) et la deuxième mémoire (1071), et **en ce que** les données transmises entre la première matrice de commutation (1013) et la première passerelle périphérique (1022) sont comparées par une deuxième unité de comparaison (1090) avec les données transmises entre la deuxième matrice de commutation (1063) et la deuxième passerelle périphérique (1072).

7. Système informatique de contrôle selon la revendication 5 ou 6, **caractérisé en ce qu'**un multiplexeur (1171, 1172, 1173, 1174) est respectivement positionné entre les processeurs (1001, 1002, 1003, 1004) des paires de processeurs et les matrices de commutation (1013, 1063), les multiplexeurs étant connectés de telle sorte que le premier processeur (1001, 1003) d'une paire de processeurs peut accéder à la deuxième matrice de commutation (1063) et le deuxième processeur (1002, 1004) d'une paire de processeurs peut accéder à la première matrice de commutation (1013) dès que l'unité de rétablissement (1080) commande les multiplexeurs (1171, 1172, 1173, 1174) en conséquence.

8. Système informatique de contrôle selon l'une des revendications précédentes, **caractérisé en ce que** l'au moins une matrice de commutation (1013, 1063) comporte une unité de surveillance (1014, 1064) qui est conçue pour bloquer les accès à la mémoire ou aux unités périphériques ou pour journaliser les accès dans une mémoire externe ou interne de préférence non volatile.

9. Système informatique de contrôle selon l'une des revendications 1 à 8, **caractérisé en ce que** l'unité de traitement d'erreur (1080) reçoit directement des signaux des au moins deux unités de comparaison (1011, 1012) sans matrice de commutation (1013, 1063) interconnectée.

10. Système informatique de contrôle selon l'une des revendications 1 à 9, **caractérisé en ce que** le système informatique de contrôle comporte une première et une deuxième mémoire volatile ainsi qu'une mémoire non volatile, une première paire de processeurs accédant notamment à la première mémoire volatile et une deuxième paire de processeurs accédant à la deuxième mémoire volatile et les deux paires de processeurs accédant à ladite une mémoire non volatile.

11. Système informatique de contrôle selon l'une des revendications 1 à 10, **caractérisé en ce qu'**un premier processeur (1001, 1003) d'une paire de processeurs est relié directement à au moins une matrice de commutation (1013), c'est-à-dire qu'il peut accéder en lecture et en écriture à la mémoire (1020, 1021) et/ou aux unités périphériques (1022, 1030, 1031, ..., 1038), alors qu'un deuxième processeur (1002, 1004) d'une paire de processeurs ne peut accéder qu'en lecture aux données, une unité de comparaison (1011, 1012) connectée directement aux deux processeurs d'une paire de processeurs communiquant notamment des données au deuxième processeur (1002, 1004) de la paire de processeurs connectée.

12. Système informatique de contrôle selon l'une des revendications 1 à 11, **caractérisé en ce que** l'unité de traitement d'erreur (1080) est une unité de contrôle de rétablissement (44) qui est conçue pour surveiller l'exécution d'au moins un programme de test par les au moins deux paires de processeurs (1, 2, 1001&1002, 1003&1004) après survenance d'une erreur de synchronisation et évaluer les résultats de test, et est en outre conçue pour configurer au moins un premier multiplexeur (70, 91) ou la matrice de commutation (1013, 1063).

13. Système informatique de contrôle selon la revendication 12, **caractérisé en ce que** l'unité de contrôle de rétablissement (44) est conçue pour attribuer un type d'erreur à l'erreur de synchronisation et sélectionner un programme de test sur la base du type d'erreur.

14. Système informatique de contrôle selon la revendication 12 ou 13, **caractérisé en ce que** l'unité de contrôle de rétablissement (44) est conçue pour configurer le premier multiplexeur (70, 91) sur la base du résultat de test.

15. Système informatique de contrôle selon l'une des revendications 1 à 14, **caractérisé en ce qu'**une première unité périphérique (72) est une unité commune qui peut être pilotée sélectivement par l'une de deux paires de processeurs (1, 2, 1001&1002, 1003&1004) et le système informatique de contrôle comporte au moins deux unités périphériques (61, 63) supplémentaires, l'une des deux unités périphériques (61, 63) étant seulement associée à la première paire de processeurs (1, 1001&1002) et l'autre des deux unités périphériques (61, 63) seulement à la deuxième paire de processeurs (2, 1003&1004) en tant qu'unité périphérique privée à laquelle peut accéder seule la paire de processeurs (1, 2, 1001&1002, 1003&1004) qui lui est respectivement associée. [0020]

16. Système informatique de contrôle selon la revendication 15, **caractérisé en ce que** les deux unités périphériques (61, 63) supplémentaires sont des unités redondantes.

17. Procédé pour commander un système informatique de contrôle, lequel comporte au moins deux paires de processeurs (1001&1002, 1003&1004) ayant chacune exactement deux processeurs et/ou cœurs de processeur (1, 2, 1001&1002, 1003&1004) de conception redondante, au moins deux unités de comparaison (1011, 1012) destinées à surveiller l'état de synchronisation des processeurs de conception redondante de chaque paire de processeurs (1, 2, 1001&1002, 1003&1004) et à reconnaître une erreur de synchronisation, au moins une unité périphérique (95, 96, 1022, 1030, 1031, ..., 1038), au moins une matrice de commutation (1013, 1063) qui rend possible ou bloque des accès d'un processeur ou d'une paire de processeurs à une mémoire et/ou au moins une unité périphérique, et au moins une unité de traitement d'erreur (1080) qui est conçue pour recevoir des signaux des deux unités de comparaison (20, 21, 91, 92, 1011, 1012) et piloter l'au moins une matrice de commutation (1013, 1063) en vue d'empêcher, au choix, entièrement ou de manière sélective un accès d'un processeur ou d'un cœur de processeur ou d'une paire de processeurs à au moins une mémoire (1020, 1021, 1071) et/ou aux unités périphériques (95, 96, 1022, 1030, 1031, ..., 1038), les paires de processeurs (1, 2, 1001&1002, 1003&1004), dans un fonctionnement sans erreur, pouvant exécuter différents programmes en vue de mettre à disposition des fonctions et, en cas de survenance d'une erreur, la paire de processeurs (1, 2, 1001&1002, 1003&1004) exempte d'erreur prenant en charge au moins certaines fonctions de la paire de processeurs (1, 2, 1001&1002, 1003&1004) affectée par une erreur, et le système informatique de contrôle comportant au moins deux matrices de commutation (1013, 1063) séparées, la première matrice de commutation (1013) étant reliée à une première passerelle périphérique (1022) et au moins une première mémoire (1021), alors que la deuxième matrice de commutation (1063) est reliée à une deuxième passerelle périphérique (1072) et au moins une deuxième mémoire (1071), et les étapes suivantes étant exécutées :
- transmission de données entre la première matrice de commutation (1013) et la première mémoire (1021), entre la deuxième matrice de commutation (1063) et la deuxième mémoire (1071), entre la première matrice de commutation (1013) et la première passerelle périphérique (1022) et entre la deuxième matrice de commutation (1063) et la deuxième passerelle périphérique (1072),
- comparaison des données transmises entre la première matrice de commutation (1013) et la première mémoire (1021) avec les données transmises entre la deuxième matrice de commutation (1063) et la deuxième mémoire (1071),
- comparaison des données transmises entre la première matrice de commutation (1013) et la première passerelle périphérique (1022) avec les données transmises entre la deuxième matrice de commutation (1063) et la deuxième passerelle périphérique (1072).

18. Procédé selon la revendication 17, **caractérisé en ce que** les fonctions critiques pour la sécurité du dispositif piloté par le système informatique de contrôle sont exécutées indépendamment de la survenance d'une erreur.

19. Procédé selon la revendication 17 ou 18, **caractérisé en ce qu'**en cas de survenance d'une erreur, des fonctions non critiques pour la sécurité ne sont au moins partiellement plus mises à disposition.

20. Procédé selon l'une des revendications 17 à 19, **caractérisé en ce qu'**en cas de survenance d'une erreur, des accès à l'unité périphérique du processeur ou de la paire de processeurs affecté(e) par l'erreur sont bloqués.

21. Procédé selon l'une des revendications 17 à 20, **caractérisé en ce qu'**après la survenance d'une erreur, la paire de processeurs affectée par l'erreur exécute un programme de diagnostic.

22. Procédé selon la revendication 21, **caractérisé en ce que** les erreurs survenues sont classifiées, une différence étant faite au moins entre les erreurs temporaires et permanentes.

23. Procédé selon la revendication 22, **caractérisé en ce qu'**après la survenance d'une erreur permanente, la paire de processeurs affectée par l'erreur est désactivée durablement.

24. Procédé selon la revendication 22 ou 23, **caractérisé en ce que** les deux paires de processeurs peuvent de nouveau exécuter différents programmes lorsque la paire de processeurs affectée par l'erreur a exécuté le programme de diagnostic sans reconnaître une erreur persistante.

25. Procédé selon l'une des revendications 17 à 24, **caractérisé en ce que** l'unité de traitement d'erreur journalise la survenance d'erreurs dans une mémoire non volatile.

26. Procédé selon la revendication 25, **caractérisé en ce qu'**une paire de processeurs est désactivée durablement lorsque le nombre et/ou la fréquence des erreurs qui surviennent dépasse une valeur de seuil prédéfinie.

27. Utilisation d'un système informatique de contrôle selon l'une des revendications précédentes dans un véhicule automobile, notamment pour commander ou pour réguler un système de freinage.

28. Procédé selon l'une des revendications 17 à 26, **caractérisé en ce que**
- exécution synchrone d'au moins un premier programme logiciel concernant la sécurité sur une paire de processeurs et exécution synchrone d'au moins un deuxième programme logiciel concernant la sécurité sur l'autre paire de processeurs en vue de piloter l'une ou les plusieurs unités périphériques et/ou la mémoire ;
- surveillance de la synchronisation des processeurs (1001&1002, 1003&1004) de chaque paire de processeurs par l'unité de comparaison (1011, 1012) et délivrance d'un signal d'erreur de synchronisation par l'unité de comparaison (1011, 1012) lorsque les deux processeurs (1001&1002, 1003&1004) d'une paire de processeurs sont désynchronisés ; et
- dans la mesure où un signal d'erreur de synchronisation a été délivré :
- interruption de l'exécution du premier programme logiciel concernant la sécurité et du deuxième programme logiciel concernant la sécurité par les paires de processeurs,
- réalisation d'un test pour vérifier si l'une des deux paires de processeurs est affectée par l'erreur et
- si l'une des deux paires de processeurs est affectée par l'erreur, exécution du premier programme logiciel concernant la sécurité et du deuxième programme logiciel concernant la sécurité sur la paire de processeurs exempte d'erreur et pilotage de la matrice de commutation (1013, 1063) par l'unité de traitement d'erreur (1080) afin de bloquer l'accès de la paire de processeurs affectée par l'erreur ou d'un processeur, si un seul processeur de cette paire de processeurs est affecté par l'erreur, à la mémoire et/ou à une ou plusieurs unités périphériques.

29. Procédé selon la revendication 28, **caractérisé en ce que** le test comprend l'exécution simultanée d'au moins un programme de test par les deux paires de processeurs, un processeur des paires de processeurs étant considéré comme défectueux lorsqu'au moins l'une des conditions suivantes est remplie :
- le processeur n'a pas terminé l'exécution du programme de test dans une première période T1,
- le processeur n'a pas réussi à terminer l'exécution du programme de test,
- le processeur n'est pas passé dans l'état de repos pendant une deuxième période T2 après l'écoulement de la première période T1.

30. Procédé selon la revendication 28 ou 29, **caractérisé en ce que** l'erreur de synchronisation est évaluée et un type d'erreur lui est attribué, au moins un programme de test étant sélectionné sur la base du type d'erreur pour le contrôle des processeurs.
